# EUROPÄISCHE PATENTSCHRIFT

(11) **EP 4 193 574 B1**
(45) Veröffentlichungstag und Bekanntmachung des Hinweises auf die Patenterteilung: **10.09.2025**
(21) Anmeldenummer: 21745982.5
(22) Anmeldetag: 15.07.2021
(51) Int. Cl.: H04J 3/06, H04L 12/413, H04L 7/033, H04L 25/49, H04L 12/40

(54) **TEILNEHMERSTATION FÜR EIN SERIELLES BUSSYSTEM UND VERFAHREN ZUR KOMMUNIKATION IN EINEM SERIELLEN BUSSYSTEM**
SUBSCRIBER STATION FOR A SERIAL BUS SYSTEM, AND METHOD FOR COMMUNICATION IN A SERIAL BUS SYSTEM
STATION D'ABONNÉ D'UN SYSTÈME DE BUS SÉRIE ET PROCÉDÉ DE COMMUNICATION DANS UN SYSTÈME DE BUS SÉRIE

(30) Priorität: 05.08.2020 DE 102020209918
(43) Veröffentlichungstag der Anmeldung: 14.06.2023
(73) Patentinhaber: Robert Bosch GmbH, 70442 Stuttgart (DE)
(72) Erfinder: HARTWICH, Florian, 72762 Reutlingen (DE); BAILER, Franz, 72116 Moessingen (DE); MUTTER, Arthur, 73765 Neuhausen (DE)
(86) Internationale Anmeldenummer: PCT/EP2021/069845
(87) Internationale Veröffentlichungsnummer: WO 2022/028851

(56) Entgegenhaltungen:
- EP-A1- 2 712 123
- DE-A1- 102011 122 845
- DE-A1- 102018 221 958

## Beschreibung

### Technisches Gebiet

Die vorliegende Erfindung betrifft eine Teilnehmerstation für ein serielles Bussystem und ein Verfahren zur Kommunikation in einem seriellen Bussystem, das mit hoher Datenrate sowie großer Flexibilität und großer Fehlerrobustheit arbeitet.

### Stand der Technik

Bussysteme für die Kommunikation zwischen Sensoren und Steuergeräten, beispielsweise in Fahrzeugen, sollen je nach der Anzahl an Funktionen einer technischen Anlage bzw. eines Fahrzeugs, die Übertragung einer großen Datenmenge ermöglichen. Dabei wird oft gefordert, dass die Daten schneller vom Sender zum Empfänger zu übertragen sind als bisher und bei Bedarf auch große Datenpakete übertragbar sind.

Bei Fahrzeugen ist derzeit ein Bussystem in der Einführungsphase, in welchem Daten als Nachrichten im Standard ISO11898-1:2015 als CAN Protokoll-Spezifikation mit CAN FD übertragen werden. Die Nachrichten werden zwischen den Busteilnehmern des Bussystems, wie Sensor, Steuergerät, Geber, usw., übertragen. Hierfür wird die Nachricht auf den Bus in einem Rahmen gesendet, in dem zwischen zwei Kommunikationsphasen umgeschaltet wird. In der ersten Kommunikationsphase (Arbitration) wird ausgehandelt, welche der Teilnehmerstationen des Bussystems in der nachfolgenden zweiten Kommunikationsphase (Datenphase bzw. Senden der Nutzdaten) ihren Rahmen auf den Bus senden darf. CAN FD wird von den meisten Herstellern im ersten Schritt mit 500kbit/s Arbitrationsbitrate und 2Mbit/s Datenbitrate im Fahrzeug eingesetzt. Es ist also bei der Übertragung auf dem Bus zwischen einer langsamen Betriebsart und einer schnellen Betriebsart hin und her zu schalten.

EP 2 712 123 A1 beschreibt ein Bussystem, das gemäß dem ISO 11898-1:2003 Standard-CAN-Bussystem (heute Classical CAN genannt) betrieben wird und CAN FD Rahmen toleriert. Hierbei tolerieren alle Empfänger in Netzwerk am Ende der Datenphase eine zusätzliche Bitzeit vor und nach einer Flanke, die von einem rezessiven zu einem dominanten Zustand auf dem Bus führt und die einen Bestätigungs-Zeitschlitz ACK startet.

Um noch größere Datenraten in der zweiten Kommunikationsphase zu ermöglichen, wird derzeit ein Nachfolgebussystem für CAN FD entwickelt, das CAN XL genannt wird und derzeit bei der Organisation CAN in Automation (CiA) standardisiert wird. CAN XL soll neben dem reinen Datentransport über den CAN-Bus auch andere Funktionen unterstützen, wie funktionale Sicherheit (Safety), Datensicherheit (Security) und Dienstgüte (QoS = Quality of Service). Dies sind elementare Eigenschaften, die in einem autonom fahrenden Fahrzeug benötigt werden.

CAN XL soll in der Datenphase hohe Bitraten unterstützen, beispielsweise bis zu 15 Mbit/s oder sogar 20 Mbit/s. Um dies zu erreichen, werden derzeit auch entsprechende Sende-Empfangseinrichtungen, sogenannte CAN XL Transceiver, standardisiert. Die Betriebsart dieser Sende-Empfangseinrichtungen lässt sich umschalten, um die geforderten hohen Bitraten in der Datenphase zu erreichen. Dagegen bleibt die Bitrate in der Arbitrationsphase bei ca. 500 kbit/s, um die Arbitration zu ermöglichen. Dies hat zur Folge, das CAN XL ein sehr hohes Bitraten-Verhältnis unterstützen muss. Vorstellbar ist ein Bitraten-Verhältnis von 40, was 20Mbit/s in der Datenphase (hohe Bitrate) zu 500kbit/s in der Arbitrationsphase (niedrige Bitrate) entspricht.

Bei CAN XL signalisiert eine Kommunikationssteuereinrichtung der Sende-Empfangseinrichtung, dass die Sende-Empfangseinrichtung ihre Betriebsart umzuschalten hat. Für die Signalisierung verwendet die Kommunikationssteuereinrichtung, insbesondere ihr Protokoll-Controller, eine Codierung mittels Pulsweitenmodulation, was auch PWM-Codierung genannt wird. Die Sende-Empfangseinrichtung ist insbesondere ein CAN SIC XL Transceiver.

Problematisch ist, dass die PWM-Codierung in der Kommunikationssteuereinrichtung und die entsprechende PWM-Decodierung in der Sende-Empfangseinrichtung zu einem Zeitversatz (Delay) führen.

Zusätzlich ist dabei zu beachten, dass bei CAN die Takte eine gewisse Toleranz aufweisen können.

Noch ein zusätzliches Problem besteht darin, dass die drei beschriebenen Effekte, nämlich hohes Bitraten-Verhältnis, PWM Codierung/Decodierung, TaktToleranz, insgesamt einen großen Phasenfehler bei einer Teilnehmerstation zur Folge haben, die derzeit nur Empfänger einer über den Bus übertragenen Nachricht ist. Derartige Teilnehmerstationen können auch als Empfangsknoten bezeichnet werden.

Im schlimmsten Fall versucht ein "schneller" Empfangsknoten das erste Bit der Datenphase (DH1-Bit) abzutasten, bevor das DH1-Bit bei dem Empfangsknoten angekommen ist, und/oder ein "langsamer" Empfangsknoten tastet das DH1-Bit erst ab, nachdem das DH1-Bit auf dem Bus bereits vorbei ist. In beiden Fällen führt das zu einem ungültigen Rahmen im Empfangsknoten. Dadurch wird die Nettodatenrate gesenkt, die im Bussystem übertragbar ist, denn manche Rahmen müssen neu übertragen werden.

Das bedeutet, dass der Phasenfehler bei einer Teilnehmerstation zur Folge hat, dass die Bitraten-Umschaltung von der niedrigen zur hohen Bitrate innerhalb des CAN-Rahmens nicht unter allen Umständen korrekt erfolgen kann. Ohne eine zuverlässige Umschaltung der Bitrate ist jedoch keine zuverlässige und robuste Kommunikation möglich.

### Offenbarung der Erfindung

Daher ist es Aufgabe der vorliegenden Erfindung, eine Teilnehmerstation für ein serielles Bussystem und ein Verfahren zur Kommunikation in einem seriellen Bussystem bereitzustellen, welche die zuvor genannten Probleme lösen. Insbesondere sollen eine Teilnehmerstation für ein serielles Bussystem und ein Verfahren zur Kommunikation in einem seriellen Bussystem bereitgestellt werden, bei welchen auch bei hoher Datenrate und einer Steigerung der Menge der Nutzdaten pro Rahmen eine große Fehlerrobustheit der Kommunikation realisierbar ist.

Die Aufgabe wird durch eine Teilnehmerstation für ein serielles Bussystem mit den Merkmalen von Anspruch 1 gelöst. Die Teilnehmerstation hat eine Kommunikationssteuereinrichtung zum Steuern einer Kommunikation der Teilnehmerstation mit mindestens einer anderen Teilnehmerstation des Bussystems, so dass sich für eine Nachricht, die zwischen Teilnehmerstationen des Bussystems ausgetauscht wird, die Bitzeit eines in der ersten Kommunikationsphase auf den Bus gesendeten Signals unterscheiden kann von einer Bitzeit eines in der zweiten Kommunikationsphase gesendeten Signals, und eine Sende-/Empfangseinrichtung zum Senden des Sendesignals auf einen Bus des Bussystems, wobei die Kommunikationssteuereinrichtung ausgestaltet ist, das Sendesignal gemäß einem Rahmen zu erzeugen und in den Rahmen zum Übergang von der ersten Kommunikationsphase in die zweite Kommunikationsphase ein Feld mit einer steigenden Flanke und einer darauffolgenden fallenden Flanke einzufügen, und wobei das Feld zwischen der steigenden Flanke und der darauffolgenden fallenden Flanke eine vorbestimmte Länge hat, so dass ein Abtastzeitpunkt, zu welchem eine Kommunikationssteuereinrichtung der mindestens einen anderen Teilnehmerstation des Bussystems das erste Bit der zweiten Kommunikationsphase abtasten wird, zwischen der steigenden Flanke und der darauffolgenden fallenden Flanke angeordnet ist, wie in Anspruch 1 beschrieben.

Durch die Ausgestaltung der Teilnehmerstation ist ein verändertes ADS-Feld vorhanden, mit dem sichergestellt ist, dass die Bitraten-Umschaltung von der niedrigen zur hohen Bitrate innerhalb des CAN-Rahmens unter allen Umständen korrekt erfolgen kann. Insbesondere funktioniert die Bitraten-Umschaltung bei dem Übergang von der ersten Kommunikationsphase (Arbitrationsphase) zur zweiten Kommunikationsphase (Datenphase) auch bei einem hohen Phasenfehler zuverlässig. Insbesondere kann die Teilnehmerstation trotz Phasenfehler das erste Bit der zweiten Kommunikationsphase (Datenphase) und dann die nachfolgenden Bits der zweiten Kommunikationsphase (Datenphase) korrekt abtasten.

Mit der Teilnehmerstation wird damit eine zuverlässige und robuste Kommunikation mit CAN XL erst ermöglicht. Dies gilt auch bei extremer Einstellung der Systemparameter, wie Takttoleranz, PWM-Symbollänge, Bit-Timing-Einstellung oder sonstiger Parameter des Bussystems.

Vorteilhaft ist außerdem, dass die beschriebene Ausgestaltung der Teilnehmerstation zur Lösung der zuvor genannten Aufgabe unaufwändig und damit kostengünstig realisierbar ist.

Somit ist es mit der Teilnehmerstation in dem Bussystem möglich, in einer ersten Kommunikationsphase eine von CAN bekannte Arbitration beizubehalten und dennoch die Übertragungsrate gegenüber CAN oder CAN FD nochmals beträchtlich zu steigern.

Das von der Teilnehmerstation durchgeführte Verfahren kann auch zum Einsatz kommen, wenn in dem Bussystem auch mindestens eine CAN-Teilnehmerstation und/oder mindestens eine CAN FD Teilnehmerstation vorhanden ist, die Nachrichten nach dem CAN-Protokoll und/oder CAN FD Protokoll senden.

Vorteilhafte weitere Ausgestaltungen der Teilnehmerstation sind in den abhängigen Ansprüchen angegeben.

Möglich ist, dass die vorbestimmte Länge des Felds mindestens drei Bits mit der Bitzeit der zweiten Kommunikationsphase aufweist.

Die fallende Flanke kann den Beginn eines vorbestimmten Bits der zweiten Kommunikationsphase definieren. Die Flanke kann zur Synchronisation auf die Kommunikation auf dem Bus für eine Kommunikationssteuereinrichtung der mindestens einen anderen Teilnehmerstation des Bussystems vorgesehen sein.

Denkbar ist, dass die Kommunikationssteuereinrichtung ausgestaltet ist, das Feld als eine Bitfolge mit dem logischen Wert 1110 einzufügen.

In einer Ausgestaltung kann die Kommunikationssteuereinrichtung ausgestaltet sein, in dem Feld vor der fallenden Flanke ein Bit mit der Bitzeit der ersten Kommunikationsphase und im Anschluss daran ein Bit mit der Bitzeit der zweiten Kommunikationsphase einzufügen, wobei die Kommunikationssteuereinrichtung ausgestaltet ist, im Anschluss an das Bit mit der Bitzeit der zweiten Kommunikationsphase zusätzlich eine Anzahl von M Bits mit der Bitzeit der zweiten Kommunikationsphase einzufügen, die jeweils den gleichen logischen Wert 1 haben wie das erste Bit der zweiten Kommunikationsphase, und wobei M eine natürliche Zahl größer oder gleich 1 ist.

Die Kommunikationssteuereinrichtung kann in der zweiten Kommunikationsphase als Empfangsknoten agieren, so dass die Kommunikationssteuereinrichtung nur als Empfänger aber nicht als Sender des Rahmens auf den Bus agiert, wobei die Kommunikationssteuereinrichtung ausgestaltet ist, in dem Feld ab und einschließlich dem Abtastzeitpunkt, zu welchem die Kommunikationssteuereinrichtung das erste Bit der zweiten Kommunikationsphase abtastet, und vor der fallenden Flanke des Felds eine Anzahl von N Bits mit der Bitzeit der zweiten Kommunikationsphase zu tolerieren, die jeweils den logischen Wert 1 haben, wobei N eine natürliche Zahl größer oder gleich 1 ist, und wobei die Kommunikationssteuereinrichtung ausgestaltet ist, die fallende Flanke des Felds zu verwenden, um sich auf die Kommunikation auf dem Bus zu synchronisieren.

Denkbar ist, dass die Teilnehmerstation zudem die Sende-/Empfangseinrichtung zum Senden des Sendesignals auf einen Bus des Bussystems aufweist, wobei die Kommunikationssteuereinrichtung ausgestaltet ist, der Sende-/Empfangseinrichtung mittels Pulsweitenmodulation in dem Sendesignal zu signalisieren, dass die Sende-/Empfangseinrichtung ihre Betriebsart umzuschalten hat, wie in den Ansprüchen 1 und 7 beschrieben. Hierbei kann die Kommunikationssteuereinrichtung ausgestaltet sein, der Sende-/Empfangseinrichtung direkt nach der steigenden Flanke des Felds mittels Pulsweitenmodulation in dem Sendesignal zu signalisieren, dass die Sende-/Empfangseinrichtung ihre Betriebsart von der Betriebsart der ersten Kommunikationsphase in eine unterschiedliche Betriebsart der zweiten Kommunikationsphase umzuschalten hat, wie in Anspruch 8 beschrieben.

In einer Ausgestaltung signalisiert die Kommunikationssteuereinrichtung der Sende-/Empfangseinrichtung mit S direkt aufeinanderfolgenden PWM-Symbolen in dem Sendesignal, in welche Betriebsart der zweiten Kommunikationsphase die Sende-/Empfangseinrichtung ihre Betriebsart zu schalten hat, wobei S eine natürliche Zahl größer oder gleich 1 ist.

Gemäß einem Ausführungsbeispiel ist die Kommunikationssteuereinrichtung ausgestaltet, zumindest den letzten Teil eines Bits, das die Bitzeit der ersten Kommunikationsphase hat, mit demselben logischen Wert zu senden wie das erste Bit in dem Feld, das die Bitzeit der zweiten Kommunikationsphase hat.

Gemäß einem anderen Ausführungsbeispiel ist die Sende-/Empfangseinrichtung ausgestaltet, den gesamten Rahmen in der Betriebsart zum Senden und Empfangen des Rahmens in der ersten Kommunikationsphase auf den Bus zu senden.

Möglich ist, dass der für die Nachricht gebildete Rahmen kompatibel zu CAN FD aufgebaut ist, wobei in der ersten Kommunikationsphase ausgehandelt wird, welche der Teilnehmerstationen des Bussystems in der nachfolgenden zweiten Kommunikationsphase einen zumindest zeitweise exklusiven, kollisionsfreien Zugriff auf den Bus bekommt.

Die zuvor beschriebene Teilnehmerstation kann Teil eines Bussystems sein, das zudem einen Bus und mindestens zwei Teilnehmerstationen umfasst, welche über den Bus derart miteinander verbunden sind, dass sie seriell miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Kommunikation in einem seriellen Bussystem nach Anspruch 14 gelöst. Das Verfahren wird mit einer Teilnehmerstation des Bussystems ausgeführt, die eine Kommunikationssteuereinrichtung und eine Sende-/Empfangseinrichtung aufweist, wobei das Verfahren die Schritte aufweist, Steuern, mit der Kommunikationssteuereinrichtung einer Kommunikation der Teilnehmerstation mit mindestens einer anderen Teilnehmerstation des Bussystems, so dass sich für eine Nachricht, die zwischen Teilnehmerstationen des Bussystems ausgetauscht wird, die Bitzeit eines in der ersten Kommunikationsphase auf den Bus gesendeten Signals unterscheiden kann von einer Bitzeit eines in der zweiten Kommunikationsphase gesendeten Signals, und Senden, mit der Sende-/Empfangseinrichtung, des Sendesignals auf einen Bus des Bussystems, wobei die Kommunikationssteuereinrichtung das Sendesignal gemäß einem Rahmen erzeugt und in den Rahmen zum Übergang von der ersten Kommunikationsphase in die zweite Kommunikationsphase ein Feld mit einer steigenden Flanke und einer darauffolgenden fallenden Flanke einfügt, und wobei das Feld zwischen der steigenden Flanke und der darauffolgenden fallenden Flanke eine vorbestimmte Länge hat, so dass ein Abtastzeitpunkt, zu welchem eine Kommunikationssteuereinrichtung der mindestens einen anderen Teilnehmerstation des Bussystems das erste Bit der zweiten Kommunikationsphase abtasten wird, zwischen der steigenden Flanke und der darauffolgenden fallenden Flanke angeordnet ist, wie in Anspruch 14 beschrieben.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus einer Nachricht, die von einer Teilnehmerstation des Bussystems gemäß dem ersten Ausführungsbeispiel gesendet werden kann;
Fig. 3 ein vereinfachtes schematisches Blockschaltbild einer Teilnehmerstation des Bussystems gemäß dem ersten Ausführungsbeispiel;
Fig. 4 einen zeitlichen Verlauf von Bussignalen CAN-XL_H und CAN-XL_L bei der Teilnehmerstation gemäß dem ersten Ausführungsbeispiel;
Fig. 5 einen zeitlichen Verlauf einer Differenzspannung VDIFF der Bussignale CAN-XL_H und CAN-XL_L bei der Teilnehmerstation gemäß dem ersten Ausführungsbeispiel;
Fig. 6 bis Fig. 8 jeweils einen zeitlichen Verlauf eines Signals, das beim Senden eines Rahmens an Anschlüssen der Teilnehmerstation gemäß dem ersten Ausführungsbeispiel auftritt, wenn die Teilnehmerstation Sender der Nachricht ist, bei deren Senden eine Umschaltung der Betriebsart der Sende-/Empfangseinrichtung durchgeführt wird;
Fig. 9 den zeitlichen Verlauf von Signalzuständen, die ein Empfangsknoten an seinem Empfangsanschluss als Empfangssignal erwartet, wenn eine andere Teilnehmerstation Sender der Nachricht ist und somit Signale gemäß Fig. 6 bis Fig. 8 erzeugt;
Fig. 10 und Fig. 11 jeweils einen zeitlichen Verlauf eines Signals, das beim Senden eines Rahmens an Anschlüssen einer Teilnehmerstation gemäß einem zweiten Ausführungsbeispiel auftritt, wenn die Teilnehmerstation Sender der Nachricht ist, bei deren Senden keine Umschaltung der Betriebsart der Sende-/Empfangseinrichtung durchgeführt wird; und
Fig. 12 den zeitlichen Verlauf von Signalzuständen, die ein Empfangsknoten an seinem Empfangsanschluss als Empfangssignal erwartet, wenn eine andere Teilnehmerstation Sender der Nachricht ist und somit Signale gemäß Fig. 10 und Fig. 11 erzeugt.

In den Figuren sind gleiche oder funktionsgleiche Elemente, sofern nichts anderes angegeben ist, mit denselben Bezugszeichen versehen.

### Beschreibung der Ausführungsbeispiele

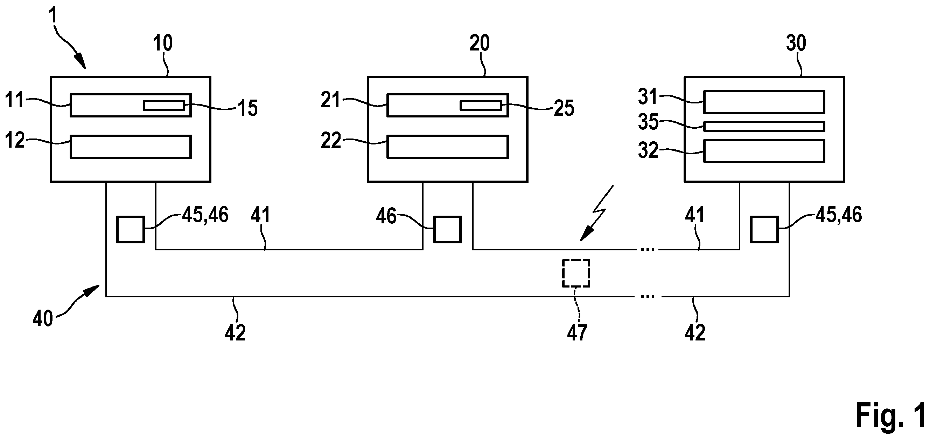

Fig. 1 zeigt als Beispiel ein Bussystem 1, das insbesondere grundlegend für ein CAN-Bussystem, ein CAN FD-Bussystem, ein CAN XL-Bussystem, und/oder Abwandlungen davon ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L oder CAN-XL_H und CAN-XL_L genannt werden und dienen zur elektrischen Signalübertragung nach Einkopplung der dominanten Pegel bzw. Erzeugung von rezessiven Pegeln oder anderen Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Tritt bei der Kommunikation auf dem Bus 40 ein Fehler auf, wie durch den gezackten schwarzen Blockpfeil in Fig. 1 dargestellt, kann optional ein Fehlerrahmen 47 (Error Flag) gesendet werden. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12 und ein Phasenfehler-Kompensationsmodul 15. Die Teilnehmerstation 20 hat eine Kommunikationssteuereinrichtung 21, eine Sende-/Empfangseinrichtung 22 und optional ein Phasenfehler-Kompensationsmodul 25. Die Teilnehmerstation 30 hat eine Kommunikationssteuereinrichtung 31, eine Sende-/Empfangseinrichtung 32 und ein Phasenfehler-Kompensationsmodul 35. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

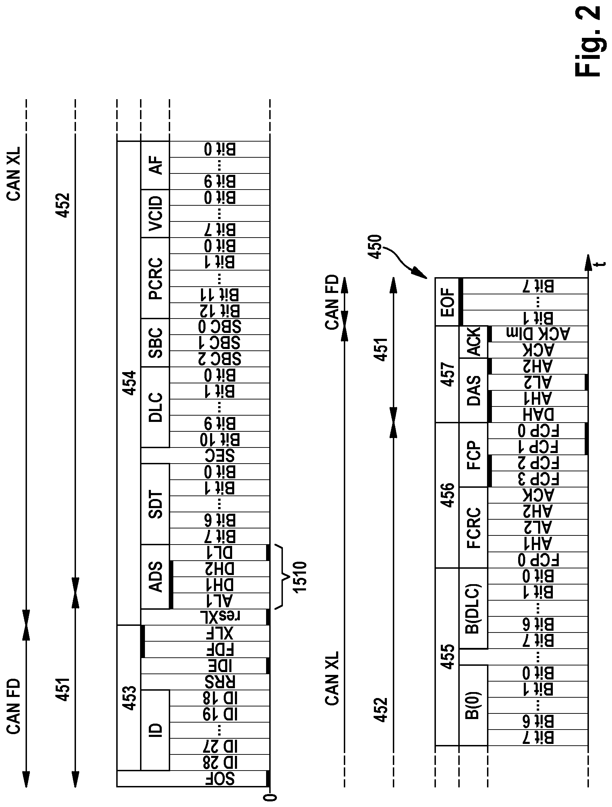

Die Kommunikationssteuereinrichtungen 11, 31 erstellen und lesen erste Nachrichten 45, die beispielsweise modifizierte CAN Nachrichten 45 sind. Hierbei sind die modifizierten CAN Nachrichten 45 auf der Grundlage eines CAN XL-Formats aufgebaut, das in Bezug auf Fig. 2 detaillierter beschrieben ist, und bei welchem das jeweilige Phasenfehler-Kompensationsmodul 15, 35 zum Einsatz kommt. Die Kommunikationssteuereinrichtungen 11, 31 können zudem ausgeführt sein, um je nach Bedarf eine CAN XL-Nachricht 45 oder eine CAN FD-Nachricht 46 für die Sende-/Empfangseinrichtung 32 bereitzustellen oder von dieser zu empfangen. Auch hierbei kommen die jeweiligen Phasenfehler-Kompensationsmodule 15, 35 zum Einsatz. Die Kommunikationssteuereinrichtungen 11, 31 erstellen und lesen also eine erste Nachricht 45 oder zweite Nachricht 46, wobei sich die erste und zweite Nachricht 45, 46 durch ihren Datenübertragungsstandard unterscheiden, nämlich in diesem Fall CAN XL oder CAN FD.

Die Kommunikationssteuereinrichtung 21 kann wie ein herkömmlicher CAN-Controller nach ISO 11898-1:2015 ausgeführt sein, d.h. wie ein CAN FD toleranter Classical CAN-Controller oder ein CAN FD Controller. Zusätzlich ist optional das Phasenfehler-Kompensationsmodul 25 vorhanden, das dieselbe Funktion hat, wie die Phasenfehler-Kompensationsmodule 15, 35. Die Kommunikationssteuereinrichtung 21 erstellt und liest zweite Nachrichten 46, beispielsweise CAN FD-Nachrichten 46. Bei den CAN FD-Nachrichten 46 kann eine Anzahl von 0 bis zu 64 Datenbytes umfasst sein, die noch dazu mit einer deutlich schnelleren Datenrate als bei einer Classical CAN-Nachrichtübertragen werden. Insbesondere ist die Kommunikationssteuereinrichtung 21 wie ein herkömmlicher CAN FD-Controller ausgeführt.

Die Sende-/Empfangseinrichtung 22 kann wie ein herkömmlicher CAN Transceiver nach ISO 11898-1:2015 oder CAN FD Transceiver ausgeführt sein. Die Sende-/Empfangseinrichtungen 12, 32 können ausgeführt sein, um je nach Bedarf Nachrichten 45 gemäß dem CAN XL-Format oder Nachrichten 46 gemäß dem derzeitigen CAN FD-Format für die zugehörige Kommunikationssteuereinrichtung 11, 31 bereitzustellen oder von dieser zu empfangen.

Mit den beiden Teilnehmerstationen 10, 30 ist eine Bildung und dann Übertragung von Nachrichten 45 mit dem CAN XL Format sowie der Empfang solcher Nachrichten 45 realisierbar.

Fig. 2 zeigt für die Nachricht 45 einen CAN XL Rahmen 450, wie er von der Kommunikationssteuereinrichtung 11 für die Sende-/Empfangseinrichtung 12 zum Senden auf den Bus 40 bereitgestellt wird. Hierbei erstellt die Kommunikationssteuereinrichtung 11 den Rahmen 450 bei dem vorliegenden Ausführungsbeispiel als kompatibel mit CAN FD, wie auch in Fig. 2 veranschaulicht. Dasselbe gilt analog für die Kommunikationssteuereinrichtung 31 und die Sende-/Empfangseinrichtung 32 der Teilnehmerstation 30.

Gemäß Fig. 2 ist der CAN XL-Rahmen 450 für die CAN-Kommunikation auf dem Bus 40 in unterschiedliche Kommunikationsphasen 451, 452 unterteilt, nämlich eine Arbitrationsphase 451 und eine Datenphase 452. Der Rahmen 450 hat nach einem Startbit (SOF) ein Arbitrationsfeld 453, ein Steuerfeld 454 mit einem ADS-Feld für eine Umschaltung zwischen den Kommunikationsphasen 451, 452, ein Datenfeld 455, ein Prüfsummenfeld 456 sowie ein Rahmenabschlussfeld 457, in dem ein DAS-Feld für eine Umschaltung zwischen den Kommunikationsphasen 452, 451 vorhanden ist. Danach folgt ein Rahmenendefeld EOF.

In der Arbitrationsphase 451 wird mit Hilfe eines Identifizierers (ID) mit beispielsweise Bits ID28 bis ID18 in dem Arbitrationsfeld 453 bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der anschließenden Datenphase 452 einen exklusiven Zugriff auf den Bus 40 des Bussystems 1 bekommt. In der Arbitrationsphase 451 wird ein Physical Layer wie bei CAN und CAN-FD verwendet. Der Physical Layer entspricht der Bitübertragungsschicht oder Schicht 1 des bekannten OSI-Modells (Open Systems Interconnection Modell).

Ein wichtiger Punkt während der Phase 451 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2 Megabit pro Sekunde im realen Fahrzeug-Einsatz.

In der Datenphase 452 werden neben einem Teil des Steuerfelds 454 die Nutzdaten des CAN-XL-Rahmens bzw. der Nachricht 45 aus dem Datenfeld 455 sowie das Prüfsummenfeld 456 gesendet. Danach folgt das DAS-Feld, das zur Umschaltung von der Datenphase 452 zurück zur Datenphase 451 dient.

Ein Sender der Nachricht 45 beginnt ein Senden von Bits der Datenphase 452 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat.

Ganz allgemein können in dem Bussystem mit CAN XL im Vergleich zu CAN oder CAN FD folgende abweichenden Eigenschaften realisiert werden:
a) Übernahme und ggf. Anpassung bewährter Eigenschaften, die für die Robustheit und Anwenderfreundlichkeit von CAN und CAN FD verantwortlich sind, insbesondere Rahmenstruktur mit Identifier und Arbitrierung nach dem CSMA/CR-Verfahren,
b) Steigerung der Netto-Datenübertragungsrate, insbesondere auf etwa 10 Megabit pro Sekunde,
c) Anheben der Größe der Nutzdaten pro Rahmen, insbesondere auf etwa 2kbyte oder einen beliebigen anderen Wert.

Wie in Fig. 2 dargestellt, verwendet die Teilnehmerstation 10 in der Arbitrationsphase 451 als erster Kommunikationsphase teilweise, insbesondere bis zum FDF-Bit (inklusive), ein von CAN/CAN-FD bekanntes Format gemäß der ISO11898-1:2015. Dagegen verwendet die Teilnehmerstation 10 ab dem FDF-Bit in der ersten Kommunikationsphase sowie in der zweiten Kommunikationsphase, der Datenphase 452, ein CAN XL Format, das nachfolgend beschrieben ist.

Bei dem vorliegenden Ausführungsbeispiel sind CAN XL und CAN FD kompatibel. Hierbei wird das von CAN FD bekannte res-Bit, das nachfolgend XLF-Bit genannt ist, für die Umschaltung von dem CAN FD Format zu dem CAN XL Format genutzt. Daher sind die Rahmenformate von CAN FD und CAN XL bis zum res-Bit bzw. XLF-Bit gleich. Ein Empfänger erkennt erst bei dem res-Bit, in welchem Format der Rahmen 450 gesendet wird. Eine CAN XL Teilnehmerstation, also hier die Teilnehmerstationen 10, 30, unterstützt auch CAN FD.

Alternativ zu dem in Fig. 2 gezeigten Rahmen 450, bei welchem ein Identifizierer (Identifier) ID28 bis ID18 mit 11 Bit verwendet wird, ist optional ein CAN XL Erweitertes Rahmenformat möglich, bei dem ein Identifizierer (Identifier) mit 29 Bit verwendet wird. Dies ist bis zum FDF-Bit identisch zu dem bekannten CAN FD Erweiterten Rahmenformat aus der ISO11898-1:2015.

Gemäß Fig. 2 ist der Rahmen 450 vom SOF-Bit bis einschließlich zum FDF-Bit identisch zum CAN FD Base Frame Format gemäß der ISO11898-1:2015. Daher ist der bekannte Aufbau hier nicht weiter erläutert. Bits, die an ihrer unteren Linie in Fig. 2 mit einem dicken Strich dargestellt sind, werden in dem Rahmen 450 als dominant oder '0' gesendet. Bits, die an ihrer oberen Linie in Fig. 2 mit einem dicken Strich dargestellt sind, werden in dem Rahmen 450 als rezessiv oder '1' gesendet. In der CAN XL Datenphase 452 werden symmetrische '1' und '0' Pegel verwendet, statt rezessiver und dominanter Pegel.

Allgemein werden bei der Erzeugung des Rahmens 450 zwei unterschiedliche Stuffing-Regeln angewendet. Bis vor dem FDF Bit im Arbitrationsfeld 453 gilt die dynamische Bit-Stuffing-Regel von CAN FD, so dass nach 5 gleichen Bits in Folge ein inverses Stuff-Bit einzufügen ist. In der Datenphase 452 bis vor das FCP Feld gilt eine feste Stuffing-Regel, so dass nach einer festen Zahl von Bits ein fixed Stuff-Bit einzufügen ist. Alternativ können statt nur einem Stuff-Bit eine Anzahl von 2 oder mehr Bits als fixed Stuff-Bits eingefügt werden.

In dem Rahmen 450 folgt direkt nach dem FDF-Bit das XLF-Bit, das von der Position her dem "res Bit" im CAN FD Base Frame Format entspricht, wie zuvor erwähnt. Wird das XLF-Bit als 1, also rezessiv, gesendet, identifiziert es damit den Rahmen 450 als CAN XL-Rahmen. Für einen CAN FD Rahmen setzt die Kommunikationssteuereinrichtung 11 das XLF-Bit als 0, also dominant.

Nach dem XLF-Bit folgt in dem Rahmen 450 ein resXL-Bit, das ein dominantes Bit für die zukünftige Nutzung ist. Das resXL muss für den Rahmen 450 als 0, also dominant, gesendet werden. Empfängt die Teilnehmerstation 10 jedoch ein resXL-Bit als 1, also rezessiv, geht die empfangende Teilnehmerstation 10 beispielsweise in einen Protokollausnahmezustand (Protocoll Exception State), so wie es bei einer CAN FD Nachricht 46 für ein res=1 ausgeführt wird. Alternativ könnte das resXL-Bit genau umgekehrt definiert sein, also, dass es als 1, also rezessiv, gesendet werden muss. In diesem Fall geht die empfangende Teilnehmerstation bei einem dominanten resXL-Bit in den Protokollausnahmezustand.

Nach dem resXL-Bit folgt in dem Rahmen 450 eine Sequenz ADS (Arbitration Data Switch), in welcher eine vorbestimmte Bitsequenz codiert wird. Diese Bitsequenz erlaubt eine einfache und sichere Umschaltung von der Bitrate der Arbitrationsphase 451 (Arbitrationsbitrate) zu der Bitrate der Datenphase 452 (Datenbitrate). Optional wird innerhalb des ADS-Felds der Physical Layer in der Sende-/Empfangseinrichtung 12, 22, 32 umgeschaltet. In diesem Fall wird während der Sequenz ADS auch die Betriebsart der Sende-Empfangseinrichtung 12, 32 umgeschaltet. Die Bitsequenz des ADS-Felds hat ein AL1-Bit, das zumindest in seinem letzten Teil, beispielsweise den letzten 50% des Bits, als logische 1 gesendet wird. Das AL1-Bit ist das letzte Bit der Arbitrationsphase 451. Die drei folgenden Bits DH1, DH2 und DL1 werden bereits mit der Datenbitrate gesendet. Somit sind die Bits DH1, DH2 und DL1 bei CAN XL zeitlich kurze Bits der Datenphase 452. Die Bits DH1 und DH2 haben jeweils den logischen Wert 1. Das letzte Bit ist das Bit DL1, das den logischen Wert 0 hat. Die Empfangsknoten synchronisieren sich nach der Bitratenumschaltung auf die fallende Flanke des Bits DL1. Das ADS-Feld wird zum Übergang von der ersten Kommunikationsphase 451 in die zweite Kommunikationsphase 452 verwendet.

Nach der Sequenz ADS folgt in dem Rahmen 450 ein SDT-Feld, das den Inhalt des Datenfeldes 455 kennzeichnet. Der Inhalt des SDT-Felds gibt an, welche Art von Information in dem Datenfeld 455 enthalten ist. Beispielsweise gibt das SDT-Feld an, ob sich im Datenfeld 455 ein "Internet Protocol" (IP) Rahmen befinden, oder ein getunnelter Ethernet Rahmen oder sonstiges.

Auf das SDT-Feld folgt ein SEC-Feld, das angibt, ob der Rahmen 450 mit dem CAN Sicherheitsprotokoll abgesichert ist oder nicht. Das SEC-Feld ist 1 Bit breit und hat wie das SDT Feld die Funktion anzugeben, welche Art von Information im Datenfeld 455 enthalten ist.

An das SEC-Feld schließt sich ein DLC-Feld an, in welchem der Datenlängencode (DLC = Data Length Code) eingefügt wird, welcher die Anzahl der Datenbytes im Datenfeld 455 des Rahmens 450 angibt. Der Datenlängencode (DLC) kann jeden Wert von 1 bis zur maximalen Zahl von Bytes des Datenfelds 455 bzw. Datenfeldlänge annehmen. Beträgt die maximale Datenfeld-Länge insbesondere 2048 Bit, benötigt der Datenlängencode (DLC) eine Anzahl von 11 Bits unter den Annahmen, dass DLC = 0 eine Datenfeld-Länge mit einer Anzahl von 1 Byte bedeutet und DLC = 2047 eine Datenfeld-Länge mit einer Anzahl von 2048 Byte Datenfeld-Länge bedeutet. Alternativ könnte ein Datenfeld 455 der Länge 0 erlaubt sein, wie beispielsweise bei CAN. Hierbei würde DLC = 0 beispielsweise die Datenfeld-Länge mit der Anzahl von 0 Bytes codieren. Die maximale codierbare Datenfeld-Länge ist mit beispielsweise 11 Bit dann (2¹¹)-1 = 2047.

Nach dem DLC-Feld folgt in dem Rahmen 450 ein SBC-Bit-Zähler-Feld (Stuff-Bit-Count). In diesem Feld ist die Anzahl der dynamischen Stuff-Bits angegeben, die im Arbitrationsfeld 453 gesendet wurden. Ein Empfangsknoten verwendet die Information des SBC-Bit-Zähler-Felds, um zu prüfen, ob der Empfangsknoten die richtige Anzahl an dynamischen Stuff-Bits empfangen hat.

Im Anschluss an das SBC-Bit-Zähler-Feld folgt eine Präambelprüfsumme PCRC, die auch Preface-CRC genannt wird. Die Präambelprüfsumme PCRC ist eine Prüfsumme zur Absicherung des Rahmenformates des Rahmens 450, das heißt aller veränderlichen Bits vom Beginn des Rahmens 450 mit dem SOF-Bit bis zum Beginn der Präambelprüfsumme PCRC, inklusive aller dynamischen und optional der fixed Stuff-Bits bis zum Beginn der Präambelprüfsumme PCRC. Die Länge der Präambelprüfsumme PCRC und damit des Prüfsummen-Polynoms gemäß der zyklischen Redundanzprüfung (CRC) ist entsprechend der gewünschten Hamming-Distanz zu wählen.

Nach der Präambelprüfsumme PCRC folgt in dem Rahmen 450 ein Feld VCID (Virtual CAN Bus ID). Das VCID-Feld hat eine Länge von 1 Byte. In dem VCID-Feld ist die Nummer eines virtuellen CAN Busses enthalten.

Nach dem Feld VCID folgt in dem Rahmen 450 ein Feld AF (Acceptance Field). Das AF-Feld hat eine Länge von 32 Bit. In dem AF-Feld ist eine Adresse oder ein anderer Wert für eine Akzeptanzfilterung enthalten.

Nach dem Feld AF folgt in dem Rahmen 450 das Datenfeld 455 (Data Field). Das Datenfeld 455 besteht aus P Bytes B, wobei P in dem DLC-Feld codiert ist, wie zuvor beschrieben. P ist eine natürliche Zahl größer oder gleich 1.

Nach dem Datenfeld 455 folgt in dem Rahmen 450 das Prüfsummenfeld 456 mit einer Rahmenprüfsumme FCRC und einem FCP-Feld. Die Rahmenprüfsumme FCRC besteht aus den Bits der Rahmenprüfsumme FCRC. Die Länge der Rahmenprüfsumme FCRC und damit des CRC Polynoms ist entsprechend der gewünschten Hamming-Distanz zu wählen. Die Rahmenprüfsumme FCRC sichert den gesamten Rahmen 450 ab. Alternativ ist optional nur das Datenfeld 455 mit der Rahmenprüfsumme FCRC abgesichert.

Nach der Rahmenprüfsumme FCRC folgt in dem Rahmen 450 das FCP-Feld, wobei FCP = Frame Check Pattern = Rahmenprüfmuster gilt. Das FCP Feld besteht aus 4 Bits mit insbesondere der Bitfolge 1100. Ein Empfangsknoten prüft mittels des FCP Felds, ob der Empfangsknoten bitsynchron zum Sende-Datenstrom ist. Zudem synchronisiert sich ein Empfangsknoten auf die fallende Flanke im FCP-Feld.

Nach dem FCP-Feld schließt sich das Rahmenabschlussfeld 457 an. Das Rahmenabschlussfeld 457 besteht aus zwei Feldern, nämlich dem DAS-Feld, und dem Bestätigungsfeld oder ACK-Feld mit dem mindestens einen Bit ACK und dem Bit ACK-Dlm.

Das DAS-Feld enthält die Sequenz DAS (Data Arbitration Switch), in welcher eine vorbestimmte Bitsequenz codiert wird. Die Bitsequenz DAH, AH1, AL2 erlaubt eine einfache und sichere Umschaltung von der Datenbitrate der Datenphase 452 zu der Arbitrationsbitrate der Arbitrationsphase 451. Zudem wird während des DAS-Felds die Betriebsart der Sende-/Empfangseinrichtung 12, 32, optional von einer Betriebsart FAST in die Betriebsart SLOW, umgeschaltet. Das DAS-Feld hat in Fig. 2 die Bits DAH, AH1, AL2, AH2. Das Bit AH2 am Ende des DAS-Felds ist optional vorgesehen. Das Bit AH2 dient zum Abstandhalten zu dem Bestätigungsfeld (ACK). Das DAS-Feld hat mindestens drei Bits. Beispielsweise hat die Bitsequenz der Sequenz DAS ein Arbitrationsbit DAH und ein Arbitrationsbit AH1, die jeweils den logischen Wert 1 haben. Innerhalb des Bits DAH -Bits wird der Physical Layer, also die Betriebsart der Sende-Empfangseinrichtung 12, 32, umgeschaltet von FAST_TX oder FAST_RX nach SLOW. Auf das Bit AH1 folgt das Bit AL2 (logisch 0) und das Bit AH2 (logisch 1). Mit den zwei Bits DAH und AH1 wird sichergestellt, dass genug Zeit für die Betriebsartumschaltung der Sende-/Empfangseinrichtung 11 vorhanden ist, und das alle Teilnehmerstationen 10, 30 einen rezessiven Pegel von deutlich mehr als einer Arbitrationsbitzeit vor der Flanke am Anfangs des AL2 Bits (logisch 0) sehen. Damit wird eine sichere Synchronisation der Teilnehmerstationen des Bussystems gewährleistet, die sich derzeit auf die Kommunikation auf dem Bus re-integrieren.

In dem Rahmenabschlussfeld 457 folgt nach der Sequenz des DAS-Felds das Bestätigungsfeld (ACK). In dem Bestätigungsfeld sind Bits zur Bestätigung oder Nichtbestätigung eines korrekten Empfangs des Rahmens 450 vorgesehen. Bei dem Beispiel von Fig. 2 sind ein ACK-Bit und ein ACK-dlm-Bit vorgesehen. Optional können zusätzlich ein NACK-Bit und ein NACK-dlm-Bit vorhanden sein. Das ACK-Bit senden die empfangenden Teilnehmerstation 10, 30 als dominant, wenn sie den Rahmen 450 korrekt empfangen haben. Die sendende Teilnehmerstation sendet das ACK-Bit als rezessiv. Daher kann das ursprünglich in dem Rahmen 450 auf den Bus 40 gesendete Bit von den empfangenden Teilnehmerstationen 10, 30 überschrieben werden. Das ACK-dlm-Bit wird als ein rezessives Bit gesendet, welches zur Abtrennung zu anderen Feldern dient. Das NACK-Bit und das NACK-dlm Bit dienen dazu, dass eine empfangende Teilnehmerstation einen nicht korrekten Empfang des Rahmens 450 auf dem Bus 40 signalisieren kann. Die Funktion der Bits ist wie die des ACK-Bits und des ACK-dlm-Bits.

Nach dem Rahmenabschlussfeld 457 folgt in dem Rahmen 450 ein Endefeld (EOF = End of Frame). Die Bitsequenz des Endefelds (EOF) dient dazu, das Ende des Rahmens 450 zu kennzeichnen. Das Endefeld (EOF) sorgt dafür, dass am Ende des Rahmens 450 eine Anzahl von 8 rezessiven Bits gesendet wird. Das ist eine Bitfolge, die innerhalb des Rahmens 450 nicht auftreten kann. Dadurch kann von den Teilnehmerstationen 10, 20, 30 das Ende des Rahmens 450 sicher erkannt werden.

Das Endefeld (EOF) hat eine Länge, die abhängig davon unterschiedlich ist, ob im ACK-Bit ein dominantes Bit oder ein rezessives Bit gesehen wurde. Wenn die sendende Teilnehmerstation das ACK-Bit als dominant empfangen hat, dann hat das Endefeld (EOF) eine Anzahl von 7 rezessiven Bits. Ansonsten ist das Endefeld (EOF) nur 5 rezessive Bits lang.

Nach dem Endefeld (EOF) folgt in dem Rahmen 450 ein Zwischenrahmenabstand (IFS - Inter Frame Space), der in Fig. 2 nicht dargestellt ist. Dieser Zwischenrahmenabstand (IFS) ist ausgestaltet wie bei CAN FD entsprechend der ISO11898-1:2015.

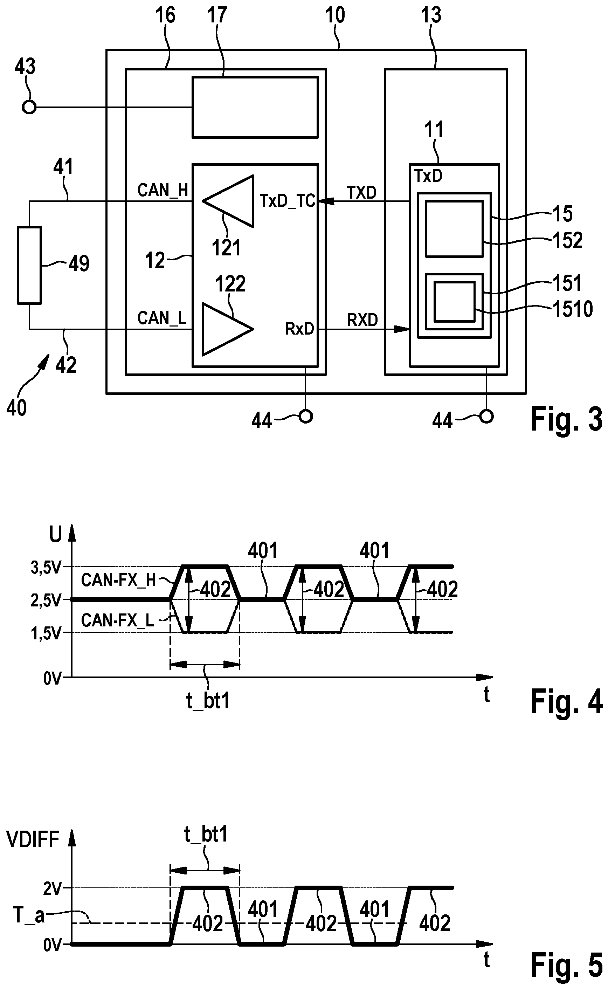

Fig. 3 zeigt den grundlegenden Aufbau der Teilnehmerstation 10 mit der Kommunikationssteuereinrichtung 11, der Sende-/Empfangseinrichtung 12 und dem Phasenfehler-Kompensationsmodul 15, das Teil der Kommunikationssteuereinrichtung 11 ist. Die Teilnehmerstation 30 ist in ähnlicher Weise aufgebaut, wie in Fig. 3 gezeigt, jedoch ist das Phasenfehler-Kompensationsmodul 35 gemäß Fig. 1 separat von der Kommunikationssteuereinrichtung 31 und der Sende-/Empfangseinrichtung 32 angeordnet. Daher wird die Teilnehmerstation 30 nicht separat beschrieben.

Gemäß Fig. 3 hat die Teilnehmerstation 10 zusätzlich zu der Kommunikationssteuereinrichtung 11 und der Sende-/Empfangseinrichtung 12 einen Mikrocontroller 13, welchem die Kommunikationssteuereinrichtung 11 zugeordnet ist, und eine System-ASIC 16 (ASIC = Anwendungsspezifische Integrierte Schaltung), die alternativ ein System Basis-Chip (SBC) sein kann, auf dem mehrere für eine Elektronik-Baugruppe der Teilnehmerstation 10 notwendige Funktionen zusammengefasst sind. In dem System-ASIC 16 ist zusätzlich zu der Sende-/Empfangseinrichtung 12 eine Energieversorgungseinrichtung 17 eingebaut, welche die Sende-/Empfangseinrichtung 12 mit elektrischer Energie versorgt. Die Energieversorgungseinrichtung 17 liefert üblicherweise eine Spannung CAN_Supply von 5 V. Je nach Bedarf kann die Energieversorgungseinrichtung 17 jedoch eine andere Spannung mit einem anderen Wert liefern. Zusätzlich oder alternativ kann die Energieversorgungseinrichtung 17 als Stromquelle ausgestaltet sein.

Das Phasenfehler-Kompensationsmodul 15 hat einen Einfügeblock 151, der ein vorbestimmtes ADS-Feld 1510 in den Rahmen 450 einfügt, und einen Signalisierblock 152. Die Blöcke 151, 152 sind nachfolgend noch genauer beschrieben sind.

Die Sende-/Empfangseinrichtung 12 hat zudem ein Sendemodul 121 und ein Empfangsmodul 122. Auch wenn nachfolgend immer von der Sende-/Empfangseinrichtung 12 gesprochen ist, ist es alternativ möglich, das Empfangsmodul 122 in einer separaten Einrichtung extern von dem Sendemodul 121 vorzusehen. Das Sendemodul 121 und das Empfangsmodul 122 können wie bei einer herkömmlichen Sende-/Empfangseinrichtung 22 aufgebaut sein. Das Sendemodul 121 kann insbesondere mindestens einen Operationsverstärker und/oder einen Transistor aufweisen. Das Empfangsmodul 122 kann insbesondere mindestens einen Operationsverstärker und/oder einen Transistor aufweisen.

Die Sende-/Empfangseinrichtung 12 ist an den Bus 40 angeschlossen, genauer gesagt dessen erste Busader 41 für CAN_H oder CAN-XL_H und dessen zweite Busader 42 für CAN_L oder CAN-XL_L. Über mindestens einen Anschluss 43 erfolgt die Spannungsversorgung für die Energieversorgungseinrichtung 17 zum Versorgen der ersten und zweiten Busader 41, 42 mit elektrischer Energie, insbesondere mit der Spannung CAN-Supply. Die Verbindung mit Masse bzw. CAN_GND ist über einen Anschluss 44 realisiert. Die erste und zweite Busader 41, 42 sind mit einem Abschlusswiderstand 49 terminiert.

Die erste und zweite Busader 41, 42 sind in der Sende-/Empfangseinrichtung 12 nicht nur mit dem Sendemodul 121, das auch als Transmitter bezeichnet wird, sondern auch mit dem Empfangsmodul 122 verbunden, das auch als Receiver bezeichnet wird, auch wenn die Verbindung in Fig. 3 zur Vereinfachung nicht gezeigt ist.

Im Betrieb des Bussystems 1 setzt das Sendemodul 121 ein Sendesignal TXD oder TxD der Kommunikationssteuereinrichtung 11 in entsprechende Signale CAN-XL_H und CAN-XL_L für die Busadern 41, 42 um und sendet diese Signale CAN-XL_H und CAN-XL_L an den Anschlüssen für CAN_H und CAN_L auf den Bus 40.

Das Empfangsmodul 122 bildet aus von dem Bus 40 empfangenen Signalen CAN-XL_H und CAN-XL_L gemäß Fig. 4 ein Empfangssignal RXD oder RxD und gibt dieses an die Kommunikationssteuereinrichtung 11 weiter, wie in Fig. 3 gezeigt. Mit Ausnahme eines Leerlauf- oder Bereitschaftszustands (Idle oder Standby), hört die Sende-/Empfangseinrichtung 12 mit dem Empfangsmodul 122 im Normalbetrieb immer auf eine Übertragung von Daten bzw. Nachrichten 45, 46 auf dem Bus 40 und zwar unabhängig davon, ob die Sende-/Empfangseinrichtung 12 Sender der Nachricht 45 ist oder nicht.

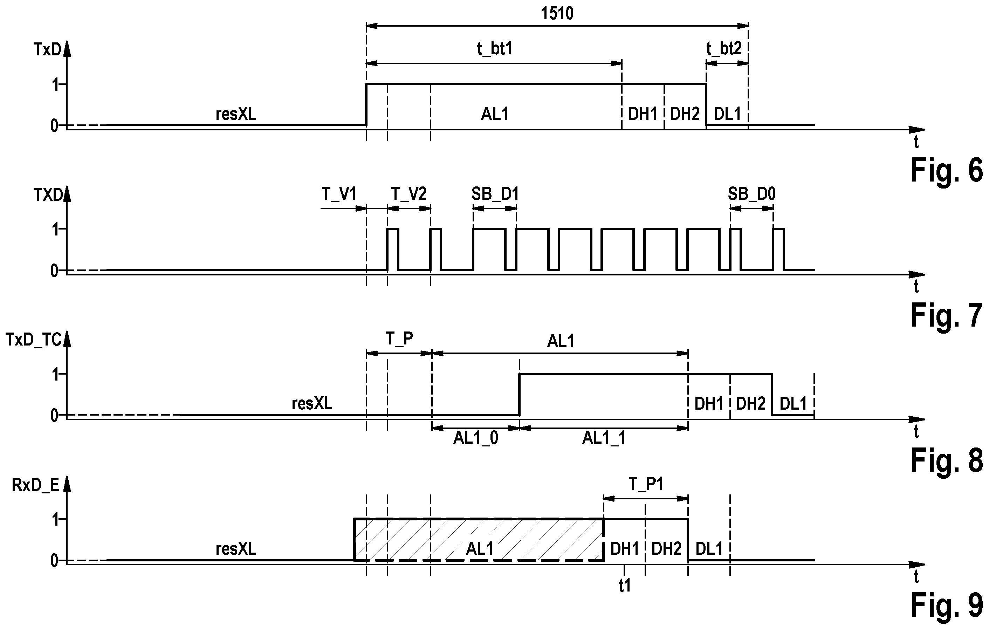

Gemäß dem Beispiel von Fig. 4 haben die Signale CAN-XL_H und CAN-XL_L zumindest in der Arbitrationsphase 451 die dominanten und rezessiven Buspegel 401, 402, wie von CAN bekannt. Auf dem Bus 40 bildet sich ein Differenzsignal VDIFF = CAN-XL_H - CAN-XL_L aus, das in Fig. 5 für die Arbitrationsphase 451 gezeigt ist. Die einzelnen Bits des Signals VDIFF mit der Bitzeit t_bt1 können in der Arbitrationsphase 451 mit einer Empfangsschwelle T_a von beispielsweise 0,7 V erkannt werden. In der Datenphase 452 werden die Bits der Signale CAN-XL_H und CAN-XL_L schneller, also mit einer kürzeren Bitzeit t_bt2, gesendet als in der Arbitrationsphase 451. Dies ist anhand von Fig. 6 bis Fig. 9 genauer beschrieben. Somit unterscheiden sich die Signale CAN-XL_H und CAN-XL_L in der Datenphase 452 zumindest in deren schnelleren Bitrate von den herkömmlichen Signalen CAN_H und CAN_L.

Die Abfolge der Zustände 401, 402 für die Signale CAN-XL_H, CAN-XL_L in Fig. 4 und der daraus resultierende Verlauf der Spannung VDIFF von Fig. 5 dient nur der Veranschaulichung der Funktion der Teilnehmerstation 10. Die Abfolge der Datenzustände für die Buszustände 401, 402 ist je nach Bedarf wählbar.

Mit anderen Worten erzeugt das Sendemodul 121, wenn es in eine erste Betriebsart B_451 (SLOW) geschaltet ist, gemäß Fig. 4 einen ersten Datenzustand als Buszustand 402 mit unterschiedlichen Buspegeln für zwei Busadern 41, 42 der Busleitung und einen zweiten Datenzustand als Buszustand 401 mit demselben Buspegel für die zwei Busadern 41, 42 der Busleitung des Busses 40.

Außerdem sendet das Sendemodul 121, für die zeitlichen Verläufe der Signale CAN-XL_H, CAN-XL_L in einer zweiten Betriebsart B_452_TX (FAST_TX), welche die Datenphase 452 umfasst, die Bits mit einer höheren Bitrate auf den Bus 40. Die CAN-XL_H und CAN-XL_L Signale können in der Datenphase 452 zudem mit einem anderen Physical Layer als bei CAN FD erzeugt werden. Dadurch kann die Bitrate in der Datenphase 452 noch weiter erhöht werden als bei CAN FD. Eine Teilnehmerstation, die in der Datenphase 452 kein Sender des Rahmens 450 ist, stellt in ihrer Sende-/Empfangseinrichtung eine dritte Betriebsart B_452_RX (FAST_RX) ein.

Zur Signalisierung der Umschaltung von der Betriebsart B_451 in die Betriebsart B_452_TX (FAST_TX) oder die Betriebsart B_452_RX (FAST_RX) führt die Kommunikationssteuereinrichtung 11 eine Pulsweitenmodulation (PWM) des Sendesignals TxD durch. Dazu verwendet die Kommunikationssteuereinrichtung 11 ein oder mehr PWM-Symbole pro logischem Bit des CAN XL Rahmens 450. Grundsätzlich gilt, dass ein PWM-Symbol aus zwei Phasen besteht, nämlich einer 0-Phase und einer 1-Phase. Außerdem wird ein PWM-Symbol von zwei gleichen Flanken begrenzt, beispielsweise von zwei steigenden Flanken.

Das Phasenfehler-Kompensationsmodul 15 von Fig. 3, insbesondere dessen Einfügeblock 151, dient zum Einfügen des ADS-Felds 1510 in den Rahmen 450, wenn die Teilnehmerstation 10 als Sender des Rahmens 450 agiert. Zudem kann das Phasenfehler-Kompensationsmodul 15, insbesondere sein Signalisierblock 152, die Pulsweitenmodulation (PWM) durchführen, wie nachfolgend für die Umschaltung zwischen den Betriebsarten B_451 (SLOW) und B_452_TX (FAST_TX) beschrieben.

Fig. 6 zeigt über der Zeit t das resultierende digitale Sendesignal TxD in dem Bereich der Umschaltung von der Arbitrationsphase 451 in die Datenphase 452 eines Rahmens 450, mit anderen Worten beim Übergang von der Phase 451 zu der Phase 452. In den Rahmen 450 ist nach dem Bit resXL das ADS-Feld 1510 eingefügt. Das Sendesignal TxD wird von der Kommunikationssteuereinrichtung 11 als Sender des Rahmens 450 seriell an die Sende-/Empfangseinrichtung 12 gesendet, wie nachfolgend genauer beschrieben. Bis zu dem Bit AL1 einschließlich haben die Bits des Rahmens 450 eine Bitdauer t_bt1. Ab dem Bit DH1, dem ersten Bit der Datenphase 452, haben die Bits des Rahmens 450 eine Bitdauer t_bt2. Die Bitdauer t_b2 ist bei dem Beispiel von Fig. 6 kürzer als die Bitdauer t_bt1.

Wie in Fig. 1 gezeigt, wird das AL1-Bit bei dem vorliegenden Ausführungsbeispiel mit dem logischen Wert 1 gesendet.

Fig. 7 zeigt die über der Zeit t aus dem Sendesignal TxD resultierenden Zustände, die seriell an dem Anschluss TXD zwischen der Kommunikationssteuereinrichtung 11 und der Sende-/Empfangseinrichtung 12 auftreten. Hierfür führt die Kommunikationssteuereinrichtung 11, beispielsweise das Phasenfehler-Kompensationsmodul 15, insbesondere der Signalisierblock 152, in der Datenphase 452 die Pulsweitenmodulation (PWM) des Sendesignals TxD von Fig. 6 durch. Genauer gesagt, beginnt die Pulsweitenmodulation (PWM) des Sendesignals TxD von Fig. 6 mit dem AL1-Bit. In der Arbitrationsphase 451 vor dem AL1-Bit erfolgt keine Pulsweitenmodulation (PWM) des Sendesignals TxD.

Am Ende der Arbitrationsphase 451 erkennt die Sende-/Empfangseinrichtung 12 aufgrund der hohen Frequenz der Flanken des Signals am TXD Anschluss, dass die Sende-/Empfangseinrichtung 12 von der Betriebsart B_451 der Arbitrationsphase in eine der schnellen Betriebsarten B_452_TX (FAST_TX), B_452_RX (FAST_RX) wechseln soll bzw. auch dort bleiben soll. Am Wert des ersten PWM-Symbols oder der S ersten Symbole erkennt die Sende-/Empfangseinrichtung 12, ob sie in die Betriebsart B_452_TX (FAST_TX) oder die Betriebsart B_452_RX (FAST_RX) wechseln soll. S ist eine natürliche Zahl die größer oder gleich 1 ist. Das Signal an dem Anschluss TXD ist aufgrund der durchgeführten PWM-Codierung um eine Zeitdauer T_V1 verzögert gegenüber dem TxD-Signal. Der Signalisierblock 152 generiert die ersten S PWM-Symbole entsprechend der Betriebsart, in die die Sende-/Empfangseinrichtung geschaltet werden soll, und nicht abhängig von dem Wert des AL1 Bits.

Bei dem Beispiel in Fig. 7 ist bei einem PWM-Symbol SB_D0 die 0-Phase länger als die 1-Phase, was einem Bit in der Datenphase 452 mit logischem Wert 0 in dem Sendesignal TxD entspricht. Dagegen ist bei einem PWM-Symbol SB_D1 die 1-Phase länger als die 0-Phase, was einem Bit mit logischem Wert 1 entspricht. Selbstverständlich können die PWM-Symbole SB_D0, SB_D1 anders definiert sein, insbesondere genau anders herum als zuvor beschrieben.

Zudem haben die ersten zwei PWM-Symbole in dem Signal an dem Anschluss TXD bei dem Beispiel von Fig. 7 den logischen Wert 0 (SB_D0). Die Sende-Empfangseinrichtung 12, 32 wertet die ersten zwei PWM-Symbole aus, um zu entscheiden, in welche Betriebsart die Sende-Empfangseinrichtung 12, 32 umzuschalten ist. Bei dem vorliegenden Beispiel von Fig. 7 soll die Sende-/Empfangseinrichtung 12, 32 des Sendeknotens aufgrund der zwei PWM-Symbole mit dem logischen Wert 0 in die Betriebsart B_452_TX (FAST_TX) schalten. Die Umschaltung in die Betriebsart B_452_RX (FAST_RX) wird mit mindestens einem anderem Wert der beiden ersten PWM Symbole in dem AL1-Bit signalisiert.

Wie in Fig. 7 gezeigt, führt die Kommunikationssteuereinrichtung 11, beispielsweise das Phasenfehler-Kompensationsmodul 15, insbesondere der Signalisierblock 152, die anschließende Pulsweitenmodulation (PWM) des AL1-Bits des Sendesignals TxD von Fig. 6 derart durch, dass alle folgenden PWM-Symbole des AL1-Bits mit dem logischen Wert 1 gesendet werden. Somit sind in dem zweiten Teil des AL1-Bits, dem Teil nach der Signalisierung der Art der Betriebsart B_452 der Sende-Empfangseinrichtung 12, 32 für die Datenphase 452, nur Symbole SB_D1 vorhanden.

Nach der Datenphase 452 endet die Pulsweitenmodulation (PWM) des Sendesignals TxD, da in der Arbitrationsphase 451 keine Pulsweitenmodulation (PWM) des Sendesignals TxD erfolgt, wie zuvor beschrieben. Die Umschaltung von der Betriebsart B_452_TX (FAST_TX) oder der Betriebsart B_452_RX (FAST_RX) FAST_RX in die Betriebsart B_451 (SLOW) wird über das Abstellen der PWM-Codierung und somit über das Ausbleiben der vielen Flanken signalisiert.

Fig. 8 zeigt den zeitlichen Verlauf eines Signals TxD_TC, das von der Sende-/Empfangseinrichtung 12 aus den Zuständen an dem Anschluss TXD von Fig. 7 decodiert wurde. Bei dem Beispiel von Fig. 8 schaltet die Sende-/Empfangseinrichtung 12 ihre Betriebsart B_451, in welcher der Rahmen 450 Bits mit der Bitdauer t_bt1 hat, in dem Bit AL1 in die Betriebsart B_452_TX (FAST_TX) um, in welcher der Rahmen 450 Bits mit der Bitdauer t_bt2 hat. Zudem können die Bits des Rahmens 450 in der Betriebsart B_451 mit einem anderen Physical Layer auf den Bus 40 gesendet werden als in der Betriebsart B_452_TX, wie zuvor beschrieben.

Die Sende-/Empfangseinrichtung 12 decodiert also die Zustände an dem Anschluss TXD von Fig. 7 in das Signal TxD_TC gemäß Fig. 8. Für das AL1-Bit ergibt sich für den ersten Teil AL1_0 des AL1-Bits ein logischer Wert 0. Für den zweiten und letzten Teil AL1_1 des AL1-Bits in Fig. 8 ergibt sich ein logischer Wert 1.

Jedes der PWM-Symbole SB_D0, SB_D1 an dem Anschluss TXD kann erst an dem Ende des jeweiligen PWM-Symbols SB_D0, SB_D1 decodiert werden. Somit fügt die Decodierung in der Sende-/Empfangseinrichtung 12 eine zusätzliche Verzögerungszeitdauer T_V2 in das seriell auf den Bus 40 zu sendende Signal TxD_TC ein. Die Verzögerungszeitdauer T_V2 ist gleich der Zeitdauer einer Symbollänge eines der PWM-Symbole SB_D0, SB_D1, wie in Fig. 8 gezeigt. Der Phasenfehler T_P, der durch die PWM Codierung und Decodierung einmalig in der sendenden Teilnehmerstation erzeugt wird, ist T_P = T_V1 + T_V2.

Nachdem die Sende-/Empfangseinrichtung 12 die Zustände an dem Anschluss TXD von Fig. 7 in das Signal TxD_TC gemäß Fig. 8 decodiert hat, sendet die Sende-/Empfangseinrichtung 12 das Signal TxD_TC auf den Bus 40 als die Differenzspannung VDIFF.

Fig. 9 zeigt über der Zeit t den Verlauf eines Signals RxD_E, das die empfangende Teilnehmerstation (Empfangsknoten), insbesondere ihre Kommunikationssteuereinrichtung, an ihrem RXD-Anschluss erwartet. Hierbei erwartet die empfangende Teilnehmerstation (Empfangsknoten), insbesondere ihre Kommunikationssteuereinrichtung, für das Bit AL1 keinen vorbestimmten Wert, wie mit der Schraffur in Fig. 9 veranschaulicht. Mit anderen Worten, der Wert für das Bit AL1 kann logisch 1 oder logisch 0 sein. Außerdem tastet die empfangende Teilnehmerstation (Empfangsknoten), insbesondere ihre Kommunikationssteuereinrichtung, das Bit DH1, das erste Bit der Datenphase 452, zu einem Abtastzeitpunkt t1 ab.

Gemäß Fig. 9 ist ein großer Phasenfehler T_P1 = T_V1 + T_V2 + "Phasenfehler durch Takttoleranz" zwischen dem erwarteten Empfangssignal RxD_E von Fig. 8 und dem tatsächlichen Empfangssignal vorhanden, welches identisch zu dem Signal TxD_TC von Fig. 8 ist. T_P1 ist der Abstand vom Beginn des DH1 Bits in Fig. 9 zum Beginn des DH1 Bits in Fig. 8. Hierbei ist jedoch die Signallaufzeit, insbesondere über den Bus 40, nicht berücksichtigt und in Fig. 6 bis Fig. 9 nicht dargestellt, weil die Signallaufzeit keinen Einfluss auf den Phasenfehler T_P1 hat.

Trotz des großen Phasenfehlers T_P1 tastet der Empfangsknoten das Bit DH1, das erste Bit der Datenphase 452, korrekt als logisch 1 ab. Grund dafür ist, dass das Bit AL1 in seinem letzten Teil AL1_1 bereits mit dem logischen Wert 1 gesendet wird, wie im Vergleich von Fig. 8 und Fig. 9 erkennbar.

Zudem toleriert ein Empfangsknoten, beginnend mit der Bitposition von DH1, eine Anzahl von 1 bis N direkt nacheinander abgetastete Bits mit dem logischen Wert 1. N ist eine natürliche Zahl größer oder gleich 1. Mit anderen Worten, nach dem Empfang des DH1-Bits als logisch 1, toleriert der Empfangsknoten, wenn der Empfangsknoten weitere Null bis N - 1 Bits der zweiten Kommunikationsphase 452 mit dem logischen Wert 1 abtastet, bevor der Empfangsknoten die fallende Flanke im ADS-Feld detektiert. Für die bei CAN XL anvisierten Bitraten-Verhältnisse, wie zuvor in Bezug auf die zu lösende Aufgabe beschrieben, und zu erwartenden Phasenfehler ist ein Wert von N = 5 vorteilhaft oder sinnvoll.

Die nächste fallende Flanke nach dem DH1-Bit signalisiert für den Empfangsknoten den Beginn des DL1-Bits. Alle Empfangsknoten synchronisieren sich auf diese nächste fallende Flanke nach dem DH1-Bit.

Wie in Fig. 6 bis Fig. 9 gezeigt, ist das Phasenfehler-Kompensationsmodul 15 von Fig. 3 somit bei dem vorliegenden Ausführungsbeispiel derart ausgestaltet, dass das ADS-Feld an seinem Anfang ein AL1-Bit hat, das zumindest in seinem letzten Teil AL1_1, der beispielsweise mehr als 50% des AL1-Bits entsprechen kann, als logisch 1 gesendet wird. Die Sende-/Empfangseinrichtung 12 führt aufgrund einer Signalisierung in dem ersten Teil AL1_1 des AL1-Bits die Umschaltung ihrer Betriebsart von der Betriebsart B_451 (SLOW) in die Betriebsart B_452_TX (FAST_TX) durch.

Im Ergebnis ist das ADS-Feld derart ausgestaltet, das sichergestellt ist, dass nicht nur das erste Bit DH1 der Datenphase 452 korrekt abgetastet werden kann, sondern auch eine Synchronisation zwischen Sendeknoten und Empfangsknoten ausgeführt ist, damit auch alle Bits der Datenphase ab dem DL1 Bit korrekt abgetastet werden können.

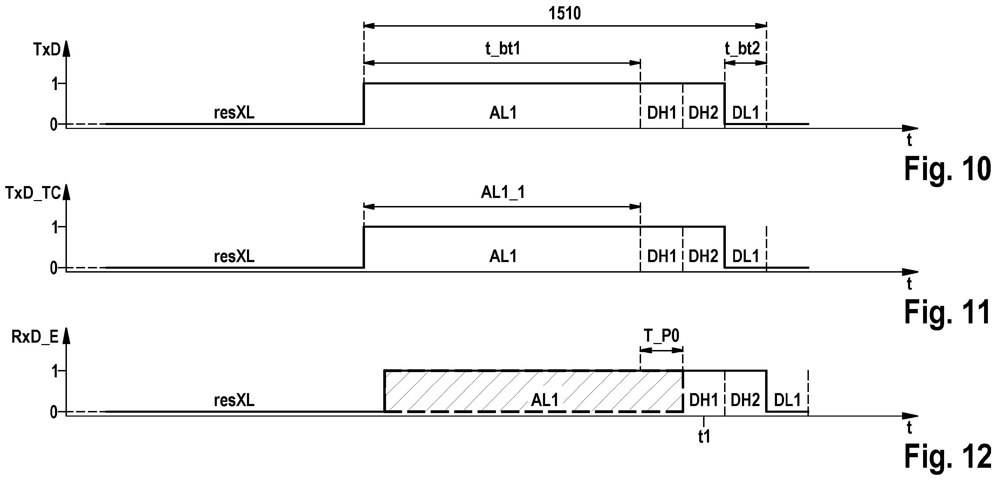

Fig. 10 bis Fig. 12 zeigen Zeitverläufe gemäß einem zweiten Ausführungsbeispiel, die sich in den nachfolgenden Aspekten von den Zeitverläufen von Fig. 6 bis Fig. 10 unterscheiden.

Im Unterschied zu dem ersten Ausführungsbeispiel findet bei dem zweiten Ausführungsbeispiel keine Betriebsartumschaltung der Sende-Empfangseinrichtungen 12, 32 statt. Dies gilt insbesondere für den Wechsel zwischen den Kommunikationsphasen 451, 452. Aufgrund dessen findet auch keine Pulsweitenmodulation (PWM) für eine Codierung der Signalisierung in dem Sendesignal TxD von Fig. 10 statt, das die zugehörige Kommunikationssteuereinrichtung 11, 31, insbesondere ihr Protokoll-Controller, erzeugt hat.

Somit ist das Signal TxD_TC gemäß Fig. 11, das die Sende-Empfangseinrichtung 12, 32 als Differenzspannung VDIFF auf den Bus 40 treibt, wenn die Sende-Empfangseinrichtung 12, 32 als Sendeknoten agiert, identisch zu dem Sendesignal TxD von Fig. 10. Da keine PWM-Codierung und daher auch keine Decodierung stattfindet, wird kein einmaliger Phasenfehler T_P zwischen dem Sendesignal TxD_TC in der Sende-Empfangseinrichtung 12, 32 und dem Sendesignal TxD erzeugt. Signallaufzeiten sind in Fig. 10 bis Fig. 12 nicht dargestellt, weil sie keinen Einfluss auf den Phasenfehler T_P0 haben und hier somit nicht relevant sind.

Um die Umschaltung von der ersten Kommunikationsphase 451 in die zweite Kommunikationsphase 452 trotz einem eventuellen großen Phasenfehler T_P0 zwischen einem Sende-und Empfangsknoten robust durchzuführen, geht die Kommunikationssteuereinrichtung 11, 31, insbesondere ihr Protokoll-Controller, vor, wie folgt.

Wie in Fig. 10 gezeigt, fügt die Kommunikationssteuereinrichtung 11, 31, insbesondere ihr Protokoll-Controller, direkt nach dem Bit DH1 mindestens ein zusätzliches Bit, bzw. 1 bis M zusätzliche Bits ein, die denselben Wert haben wie das erste Bit DH1 der Datenphase 452. Bei dem Beispiel von Fig. 10 hat die Kommunikationssteuereinrichtung 11, 31, insbesondere ihr Protokoll-Controller, direkt nach dem Bit DH1 das Bit DH2 eingefügt, also M = 1 zusätzliches Bit. M ist eine natürliche Zahl größer oder gleich 1. Die M Bits haben jeweils die Bitzeit t_bt2. Somit wird das Bit AL1 komplett mit dem logischen Wert 1 gesendet, wie mit dem Signal TxD_TC von Fig. 11 gezeigt, dass die Sende-Empfangseinrichtung 12, 32 als Differenzspannung VDIFF auf den Bus 40 treiben kann.

Fig. 12 zeigt über der Zeit t den Verlauf eines Signals RxD_E, das die empfangende Teilnehmerstation (Empfangsknoten), insbesondere ihre Kommunikationssteuereinrichtung, an ihrem RXD-Anschluss erwartet. Hierbei erwartet die empfangende Teilnehmerstation (Empfangsknoten), insbesondere ihre Kommunikationssteuereinrichtung, für das Bit AL1 keinen vorbestimmten Wert, wie mit der Schraffur in Fig. 12 veranschaulicht. Mit anderen Worten, der Wert für das Bit AL1 kann logisch 1 oder logisch 0 sein.

Gemäß Fig. 12 ist ein großer Phasenfehler T_P0 = "Phasenfehler durch Takttoleranz" zwischen dem erwarteten Empfangssignal RxD_E von Fig. 12 und dem tatsächlichen Empfangssignal vorhanden, welches identisch zu dem Signal TxD_TC von Fig. 11 ist. T_P0 ist der Abstand vom Beginn des DH1 Bits in Fig. 11 zum Beginn des DH1 Bits in Fig. 12. Der Phasenfehler T_P0 wird als groß bezeichnet, weil er im Vergleich zu der Bitzeit t_bt2 der zweiten Kommunikationsphase groß ist. Hierbei ist jedoch die Signallaufzeit, insbesondere über den Bus 40, nicht berücksichtigt und in Fig. 10 bis Fig. 12 nicht dargestellt, weil die Signallaufzeit keinen Einfluss auf den Phasenfehler T_P0 hat.

Als Folge des Phasenfehlers T_P0 tastet die empfangende Teilnehmerstation (Empfangsknoten), insbesondere ihre Kommunikationssteuereinrichtung, das Bit DH1, das erste Bit der Datenphase 452, zu dem Abtastzeitpunkt t1 ab. Somit tastet der Empfangsknoten das DH1-Bit ab, während das DH2-Bit übertragen wird, wie in Fig. 12 gezeigt.

Jedoch toleriert der Empfangsknoten, beginnend mit der Bitposition von DH1, eine Anzahl von 1 bis N direkt nacheinander abgetastete Bits mit dem logischen Wert 1. Diese(s) zusätzliche(n) N-1 Bit(s) direkt nach dem DH1-Bit kann der Empfangsknoten durch Synchronisation überspringen. N ist eine natürliche Zahl größer oder gleich 1. Für die bei CAN XL anvisierten Bitraten-Verhältnisse, wie zuvor in Bezug auf die zu lösende Aufgabe beschrieben, und zu erwartenden Phasenfehler ist ein Wert von N = 1 vorteilhaft oder sinnvoll.

Trotz des Phasenfehlers T_P0 tastet der Empfangsknoten das Bit DH1, das erste Bit der Datenphase 452, somit korrekt als logisch 1 ab. Grund dafür ist, dass nach dem Bit DH1 ein weiteres Bit DH2 mit dem gleichen logischen Wert gesendet wird.

Wie bei dem ersten Ausführungsbeispiel definiert die nächste fallende Flanke nach dem DH1-Bit den Beginn des DL1-Bits. Alle Empfangsknoten synchronisieren sich auf diese nächste fallende Flanke nach dem DH1-Bit.

Die zuvor beschriebene Ausgestaltung der Kommunikationssteuereinrichtung 11, 31 kann einen Phasenfehler T_P0 kompensieren, der beispielsweise dadurch entsteht, dass ein Sendeknoten und ein Empfangsknoten jeweils eine Taktquelle mit einer Toleranz verwenden. Dadurch ist es kein Problem mehr, wenn aufgrund der Toleranz der Taktquellen ein langsamer Empfangsknoten dem Sendeknoten deutlich "hinterher" sein sollte. Je nach Bitratenverhältnis von Datenphasen-Bitrate zu Arbitrationsphasen-Bitrate können das bis zu mehrere Datenphasen-Bits an Phasenfehler T_P0 sein.

Daher ist es kein Problem, dass der Empfangsknoten versucht, das DH1-Bit erst abzutasten, nachdem das DH1 Bit im Sendesignal (TxD_TC) bereits vorbei ist.

Im Übrigen ist die Funktionsweise des Bussystems 1 der beiden Ausführungsbeispiele gleich.

Somit wird der logische Pegel des ersten Bits in der Datenphase 452, im Vergleich zu dem derzeitigen Stand der Technik, in beide Richtungen verlängert, damit sowohl der Abtastpunkt t1 eines schnellen Empfängers bzw.

Empfangsknotens als auch der Abtastpunkt t1 eines langsamen Empfängers bzw. Empfangsknotens den Wert des ersten Bits DH1 in der Datenphase 452 korrekt als 1 abtastet. Dabei wird zur Verlängerung nach hinten, also in Richtung des Endes des Rahmens 450, direkt nach dem DH1-Bit mindestens ein neues Bit DH2 eingeführt, das denselben Wert hat wie das erste Bit DH1 der Datenphase 452. Dieses mindestens eine Bit DH2 kann der Empfänger bzw. Empfangsknotens durch Synchronisation überspringen. Alternativ oder zusätzlich kann zur Verlängerung nach vorne, also in Richtung des Anfangs des Rahmens 450, zumindest der hintere oder letzte Teil AL1_1 des AL1-Bits mit demselben Wert wie das DH1-Bit gesendet werden.

Alle zuvor beschriebenen Ausgestaltungen der Teilnehmerstationen 10, 20, 30, des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist die Erfindung bei Entwicklungen von sonstigen seriellen Kommunikationsnetzwerken, wie Ethernet und/oder 100 Base-T1 Ethernet, Feldbussystemen, usw. einsetzbar.

Insbesondere kann das Bussystem 1 gemäß den Ausführungsbeispielen ein Kommunikationsnetzwerk sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Selbstverständlich kann das ADS-Feld mehr als die genannten Bits aufweisen die in den Ausführungsbeispielen beschrieben wurden.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstation 10 oder nur Teilnehmerstation 30 vorhanden sind.

## Patentansprüche

1. Teilnehmerstation (10; 30) für ein serielles Bussystem (1), mit
einer Kommunikationssteuereinrichtung (11; 31) zum Steuern einer Kommunikation der Teilnehmerstation (10; 20; 30) mit mindestens einer anderen Teilnehmerstation (10; 20; 30) des Bussystems (1) und zur Erzeugung eines Sendesignals (TxD) für eine Sende-/Empfangseinrichtung (12; 32) der Teilnehmerstation (10; 30), so dass sich für eine Nachricht (45), die zwischen Teilnehmerstationen (10, 20, 30) des Bussystems (1) ausgetauscht wird, die Bitzeit (t_bt1) eines in einer ersten Kommunikationsphase (451) auf den Bus (40) gesendeten Signals unterscheiden kann von einer Bitzeit (t_bt2) eines in der zweiten Kommunikationsphase (452) gesendeten Signals,
wobei die Kommunikationssteuereinrichtung (11; 31) ausgestaltet ist, das Sendesignal (TxD) gemäß einem Rahmen (450) zu erzeugen und in den Rahmen (450) zum Übergang von der ersten Kommunikationsphase (451) in die zweite Kommunikationsphase (452) ein Feld (ADS) mit einer steigenden Flanke und einer darauffolgenden fallenden Flanke einzufügen,
wobei die Kommunikationssteuereinrichtung (11; 31) ausgestaltet ist, in dem Feld (ADS) und der zweiten Kommunikationsphase (452) eine Pulsweitenmodulation des Sendesignals (TxD) durchzuführen, um der Sende-/Empfangseinrichtung (12; 32) mit der Pulsweitenmodulation in dem Feld (ADS) zu signalisieren, dass die Sende-/Empfangseinrichtung (12; 32) ihre Betriebsart von der Betriebsart (B_451) der ersten Kommunikationsphase (451) in eine unterschiedliche Betriebsart (B_452_TX; 452_RX) der zweiten Kommunikationsphase (452) umschalten soll,
wobei die Kommunikationssteuereinrichtung (11; 31) ausgestaltet ist, die Pulsweitenmodulation des Sendesignals (TxD) für die Signalisierung der Betriebsartenumschaltung in dem ersten Bit (AL1) am Anfang des Felds (ADS) derart durchzuführen, dass zumindest der letzte Teil des ersten Bits (AL1) des Felds (ADS) den Wert logisch 1 hat, und
wobei die Kommunikationssteuereinrichtung (11; 31) ausgestaltet ist, keine Pulsweitenmodulation des Sendesignals (TxD) für die Signalisierung der Betriebsartenumschaltung vorzunehmen, wenn die Sende-/Empfangseinrichtung (12; 32) keine Umschaltung ihrer Betriebsart von der Betriebsart (B_451) der ersten Kommunikationsphase (451) in eine Betriebsart (B_452_TX; B_452_RX) der zweiten Kommunikationsphase (452) vornehmen soll, und direkt nach einem zweiten Bit (DH1) des Felds (ADS), welches das erste Bit (DH1) der zweiten Kommunikationsphase (452) ist, mindestens ein zusätzliches Bit einzufügen, das denselben Wert hat wie das zweite Bit (DH1) des Felds (ADS),
so dass das Feld (ADS) zwischen der steigenden Flanke und der darauffolgenden fallenden Flanke eine vorbestimmte Länge hat, und so dass ein Abtastzeitpunkt (t1), zu welchem eine Kommunikationssteuereinrichtung (21; 31; 11) der mindestens einen anderen Teilnehmerstation (10; 20; 30) des Bussystems (1) das erste Bit (DH1) der zweiten Kommunikationsphase (452) abtasten wird, zwischen der steigenden Flanke und der darauffolgenden fallenden Flanke angeordnet ist.

2. Teilnehmerstation (10; 30) nach Anspruch 1, wobei die vorbestimmte Länge des Felds (ADS) mindestens drei Bits mit der Bitzeit (t_bt2) der zweiten Kommunikationsphase (452) aufweist.

3. Teilnehmerstation (10; 30) nach Anspruch 1 oder 2, wobei die fallende Flanke den Beginn eines vorbestimmten Bits (DL1) der zweiten Kommunikationsphase (452) definiert.

4. Teilnehmerstation (10; 30) nach einem der vorangehenden Ansprüche, wobei die Kommunikationssteuereinrichtung (11) ausgestaltet ist, das Feld (ADS) als eine Bitfolge mit dem logischen Wert 1110 einzufügen.

5. Teilnehmerstation (10; 30) nach einem der vorangehenden Ansprüche,
wobei die Kommunikationssteuereinrichtung (11) ausgestaltet ist, in dem Feld (ADS) vor der fallenden Flanke ein Bit mit der Bitzeit (t_bt1) der ersten Kommunikationsphase (451) und im Anschluss daran ein Bit (DH1) mit der Bitzeit (t_bt2) der zweiten Kommunikationsphase (452) einzufügen,
wobei die Kommunikationssteuereinrichtung (11) ausgestaltet ist, im Anschluss an das Bit (DH1) mit der Bitzeit (t_bt2) der zweiten Kommunikationsphase (452) zusätzlich eine Anzahl von M Bits mit der Bitzeit (t_bt2) der zweiten Kommunikationsphase (452) einzufügen, die jeweils den gleichen logischen Wert haben wie das erste Bit (DH1) der zweiten Kommunikationsphase (452), und
wobei M eine natürliche Zahl größer oder gleich 1 ist.

6. Teilnehmerstation (10; 30) nach einem der vorangehenden Ansprüche,
wobei die Kommunikationssteuereinrichtung (11) ausgestaltet ist, in der zweiten Kommunikationsphase (452) als Empfangsknoten zu agieren, so dass die Kommunikationssteuereinrichtung (11) nur als Empfänger aber nicht als Sender des Rahmens (450) auf den Bus (40) agiert,
wobei die Kommunikationssteuereinrichtung (11) ausgestaltet ist, in dem Feld (ADS) ab und einschließlich dem Abtastzeitpunkt (t1), zu welchem die Kommunikationssteuereinrichtung (21; 31; 11) das erste Bit (DH1) der zweiten Kommunikationsphase (452) abtastet, und vor der fallenden Flanke des Felds (ADS) eine Anzahl von N Bits mit der Bitzeit (t_bt2) der zweiten Kommunikationsphase (452) zu tolerieren, die jeweils den logischen Wert 1 haben,
wobei N eine natürliche Zahl größer oder gleich 1 ist, und
wobei die Kommunikationssteuereinrichtung (11) ausgestaltet ist, die fallende Flanke des Felds (ADS) zu verwenden, um sich auf die Kommunikation auf dem Bus (40) zu synchronisieren.

7. Teilnehmerstation (10; 30) nach einem der vorangehenden Ansprüche,
zudem mit der Sende-/Empfangseinrichtung (12; 32) zum Senden des Sendesignals (TxD) auf einen Bus (40) des Bussystems (1).

8. Teilnehmerstation (10; 30) nach Anspruch 7,
wobei die Kommunikationssteuereinrichtung (11) ausgestaltet ist, der Sende-/Empfangseinrichtung (12; 32) direkt nach der steigenden Flanke des Felds (ADS) mittels Pulsweitenmodulation in dem Sendesignal (TxD) zu signalisieren, dass die Sende-/Empfangseinrichtung (12; 32) ihre Betriebsart von der Betriebsart (B_451) der ersten Kommunikationsphase (452) in eine von zwei unterschiedlichen Betriebsarten (B_452_TX; 452_RX) der zweiten Kommunikationsphase (452) und in welche der zwei Betriebsarten (B_452_TX; B_452_RX) der zweiten Kommunikationsphase (452) umzuschalten hat.

9. Teilnehmerstation (10; 30) nach Anspruch 7 oder 8, wobei die Kommunikationssteuereinrichtung (11; 31) ausgestaltet ist, der Sende-/Empfangseinrichtung (12; 32) mit S direkt aufeinanderfolgenden PWM-Symbolen (SB_D0; SB_1) in dem Sendesignal (TxD) zu signalisieren, in welche Betriebsart der zweiten Kommunikationsphase (452) die Sende-/Empfangseinrichtung (12; 32) ihre Betriebsart zu schalten hat, wobei S eine natürliche Zahl größer oder gleich 1 ist.

10. Teilnehmerstation (10; 30) nach einem der Ansprüche 7 bis 9, wobei die Kommunikationssteuereinrichtung (11; 31) ausgestaltet ist, zumindest den letzten Teil (AL1_1) eines Bits (AL1), das die Bitzeit (t_bt1) der ersten Kommunikationsphase (451) hat, mit demselben logischen Wert zu senden wie das erste Bit (DH1) in dem Feld (ADS), das die Bitzeit (t_bt2) der zweiten Kommunikationsphase (452) hat.

11. Teilnehmerstation (10; 30) nach einem der Ansprüche 1 bis 6,
zudem mit der Sende-/Empfangseinrichtung (22) zum Senden des Sendesignals (TxD) auf einen Bus (40) des Bussystems (1),
wobei die Sende-/Empfangseinrichtung (22) ausgestaltet ist, den gesamten Rahmen (450) in der Betriebsart (B_451) zum Senden und Empfangen des Rahmens (450) in der ersten Kommunikationsphase (451) auf den Bus (40) zu senden.

12. Teilnehmerstation (10; 30) nach einem der vorangehenden Ansprüche,
wobei der für die Nachricht (45) gebildete Rahmen (450) kompatibel zu CAN FD aufgebaut ist, und
wobei in der ersten Kommunikationsphase (451) ausgehandelt wird, welche der Teilnehmerstationen (10, 20, 30) des Bussystems (1) in der nachfolgenden zweiten Kommunikationsphase (452) einen zumindest zeitweise exklusiven, kollisionsfreien Zugriff auf den Bus (40) bekommt.

13. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 30) eine Teilnehmerstation (10; 30) nach einem der vorangehenden Ansprüche ist.

14. Verfahren zur Kommunikation in einem seriellen Bussystem (1), wobei das Verfahren mit einer Teilnehmerstation (10; 30) des Bussystems (1) ausgeführt wird, die eine Kommunikationssteuereinrichtung (11; 31) und eine Sende-/Empfangseinrichtung (12; 22; 32) aufweist, wobei das Verfahren die Schritte aufweist,
Steuern, mit der Kommunikationssteuereinrichtung (11; 31), einer Kommunikation der Teilnehmerstation (10; 30) mit mindestens einer anderen Teilnehmerstation (10; 20; 30) des Bussystems (1), so dass sich für eine Nachricht (45), die zwischen Teilnehmerstationen (10, 20, 30) des Bussystems (1) ausgetauscht wird, die Bitzeit (t_bt1) eines in einer ersten Kommunikationsphase (451) auf den Bus (40) gesendeten Signals unterscheiden kann von einer Bitzeit (t_bt2) eines in der zweiten Kommunikationsphase (452) gesendeten Signals, und
Senden, mit der Sende-/Empfangseinrichtung (12; 32), des Sendesignals (TxD) auf einen Bus (40) des Bussystems (1),
wobei die Kommunikationssteuereinrichtung (11; 31) das Sendesignal (TxD) für eine Sende-/Empfangseinrichtung (12; 32) der Teilnehmerstation (10; 30) gemäß einem Rahmen (450) erzeugt und in den Rahmen (450) zum Übergang von der ersten Kommunikationsphase (451) in die zweite Kommunikationsphase (452) ein Feld (ADS) mit einer steigenden Flanke und einer darauffolgenden fallenden Flanke einfügt,
wobei die Kommunikationssteuereinrichtung (11; 31) in dem Feld (ADS) und der zweiten Kommunikationsphase (452) eine Pulsweitenmodulation des Sendesignals (TxD) durchführt, um der Sende-/Empfangseinrichtung (12; 32) mit der Pulsweitenmodulation in dem Feld (ADS) zu signalisieren, dass die Sende-/Empfangseinrichtung (12; 32) ihre Betriebsart von der Betriebsart (B_451) der ersten Kommunikationsphase (451) in eine unterschiedliche Betriebsart (B_452_TX; 452_RX) der zweiten Kommunikationsphase (452) umschalten soll,
wobei die Kommunikationssteuereinrichtung (11; 31) die Pulsweitenmodulation des Sendesignals (TxD) für die Signalisierung der Betriebsartenumschaltung in dem ersten Bit (AL1) am Anfang des Felds (ADS) derart durchzuführt, dass zumindest der letzte Teil des ersten Bits (AL1) des Felds (ADS) den Wert logisch 1 hat, und
wobei die Kommunikationssteuereinrichtung (11; 31) keine Pulsweitenmodulation des Sendesignals (TxD) für die Signalisierung der Betriebsartenumschaltung vornimmt, wenn die Sende-/Empfangseinrichtung (12; 32) keine Umschaltung ihrer Betriebsart von der Betriebsart (B_451) der ersten Kommunikationsphase (451) in eine Betriebsart (B_452_TX; B_452_RX) der zweiten Kommunikationsphase (452) vornehmen soll, und direkt nach einem zweiten Bit (DH1) des Felds (ADS), welches das erste Bit (DH1) der zweiten Kommunikationsphase (452) ist, mindestens ein zusätzliches Bit einfügt, das denselben Wert hat wie das zweite Bit (DH1) des Felds (ADS),
so dass das Feld (ADS) zwischen der steigenden Flanke und der darauffolgenden fallenden Flanke eine vorbestimmte Länge hat, und so dass ein Abtastzeitpunkt (t1), zu welchem eine Kommunikationssteuereinrichtung (21; 31; 11) der mindestens einen anderen Teilnehmerstation (10; 20; 30) des Bussystems (1) das erste Bit (DH1) der zweiten Kommunikationsphase (452) abtasten wird, zwischen der steigenden Flanke und der darauffolgenden fallenden Flanke angeordnet ist.

## Claims

1. Subscriber station (10; 30) for a serial bus system (1), having
a communication control device (11; 31) for controlling a communication of the subscriber station (10; 20; 30) with at least one other subscriber station (10; 20; 30) of the bus system (1) and for generating a transmission signal (TxD) for a transmitting/receiving device (12; 32) of the subscriber station (10; 30) such that, for a message (45) exchanged between subscriber stations (10, 20, 30) of the bus system (1), the bit time (t_bt1) of a signal transmitted to the bus (40) in a first communication phase (451) may differ from a bit time (t_bt2) of a signal transmitted in the second communication phase (452),
wherein the communication control device (11; 31) is configured to generate the transmission signal (TxD) according to a frame (450) and to insert a field (ADS) having a rising edge and a subsequent falling edge into the frame (450) to transition from the first communication phase (451) to the second communication phase (452),
wherein the communication control device (11; 31) is configured to perform a pulse width modulation of the transmission signal (TxD) in the field (ADS) and the second communication phase (452) in order to use the pulse width modulation in the field (ADS) to signal to the transmitting/receiving device (12; 32) that the transmitting/receiving device (12; 32) is supposed to switch its operating mode from the operating mode (B_451) of the first communication phase (451) to a different operating mode (B_452_TX; 452_RX) of the second communication phase (452),
wherein the communication control device (11; 31) is configured to perform the pulse width modulation of the transmission signal (TxD) to signal operating mode switching in the first bit (AL1) at the beginning of the field (ADS) in such a way that at least the last part of the first bit (AL1) of the field (ADS) has the value logic 1, and
wherein the communication control device (11; 31) is configured to perform no pulse width modulation of the transmission signal (TxD) to signal operating mode switching if the transmitting/receiving device (12; 32) is not supposed to switch its operating mode from the operating mode (B_451) of the first communication phase (451) to an operating mode (B_452_TX; B_452_RX) of the second communication phase (452), and, directly after a second bit (DH1) of the field (ADS), which is the first bit (DH1) of the second communication phase (452), to insert at least one additional bit having the same value as the second bit (DH1) of the field (ADS),
so that the field (ADS) has a predetermined length between the rising edge and the subsequent falling edge, and so that a sampling time (t1) at which a communication control device (21; 31; 11) of the at least one other subscriber station (10; 20; 30) of the bus system (1) will sample the first bit (DH1) of the second communication phase (452) is arranged between the rising edge and the subsequent falling edge.

2. Subscriber station (10; 30) according to Claim 1, wherein the predetermined length of the field (ADS) comprises at least three bits with the bit time (t_bt2) of the second communication phase (452).

3. Subscriber station (10; 30) according to Claim 1 or 2, wherein the falling edge defines the start of a predetermined bit (DL1) of the second communication phase (452).

4. Subscriber station (10; 30) according to one of the preceding claims, wherein the communication control device (11) is configured to insert the field (ADS) as a bit sequence containing the logic value 1110.

5. Subscriber station (10; 30) according to one of the preceding claims, wherein the communication control device (11) is configured to insert a bit with the bit time (t_bt1) of the first communication phase (451) and subsequently a bit (DH1) with the bit time (t_bt2) of the second communication phase (452) in the field (ADS) before the falling edge,
wherein the communication control device (11) is configured to additionally insert a number of M bits with the bit time (t_bt2) of the second communication phase (452), each of which has the same logic value as the first bit (DH1) of the second communication phase (452), after the bit (DH1) with the bit time (t_bt2) of the second communication phase (452), and
where M is a natural number greater than or equal to 1.

6. Subscriber station (10; 30) according to one of the preceding claims,
wherein the communication control device (11) is configured to act as a receiving node in the second communication phase (452), so that the communication control device (11) acts only as a receiver but not as a transmitter of the frame (450) to the bus (40),
wherein the communication control device (11) is configured to tolerate a number of N bits with the bit time (t_bt2) of the second communication phase (452), each of which has the logic value 1, in the field (ADS) from and including the sampling time (t1) at which the communication control device (21; 31; 11) samples the first bit (DH1) of the second communication phase (452), and before the falling edge of the field (ADS),
N being a natural number greater than or equal to 1, and
wherein the communication control device (11) is configured to use the falling edge of the field (ADS) to synchronize with the communication on the bus (40).

7. Subscriber station (10; 30) according to one of the preceding claims, moreover having the transmitting/receiving device (12; 32) for transmitting the transmission signal (TxD) to a bus (40) of the bus system (1).

8. Subscriber station (10; 30) according to Claim 7,
wherein the communication control device (11) is configured to use pulse width modulation in the transmission signal (TxD) to signal to the transmitting/receiving device (12; 32) directly after the rising edge of the field (ADS) that the transmitting/receiving device (12; 32) needs to switch its operating mode from the operating mode (B_451) of the first communication phase (452) to one of two different operating modes (B_452_TX; 452_RX) of the second communication phase (452), and to which of the two operating modes (B_452_TX; B_452_RX) of the second communication phase (452).

9. Subscriber station (10; 30) according to Claim 7 or 8, wherein the communication control device (11; 31) is configured to use S directly consecutive PWM symbols (SB_D0; SB_1) in the transmission signal (TxD) to signal to the transmitting/receiving device (12; 32) to which operating mode of the second communication phase (452) the transmitting/receiving device (12; 32) needs to switch its operating mode, S being a natural number greater than or equal to 1.

10. Subscriber station (10; 30) according to one of Claims 7 to 9, wherein the communication control device (11; 31) is configured to transmit at least the last part (AL1_1) of a bit (AL1) that has the bit time (t_bt1) of the first communication phase (451) with the same logic value as the first bit (DH1) in the field (ADS) that has the bit time (t_bt2) of the second communication phase (452).

11. Subscriber station (10; 30) according to one of Claims 1 to 6, moreover having the transmitting/receiving device (22) for transmitting the transmission signal (TxD) to a bus (40) of the bus system (1),
wherein the transmitting/receiving device (22) is configured to transmit the whole frame (450) to the bus (40) in the operating mode (B_451) for transmitting and receiving the frame (450) in the first communication phase (451).

12. Subscriber station (10; 30) according to one of the preceding claims,
wherein the frame (450) formed for the message (45) is of a design compatible with CAN FD, and
wherein negotiation takes place in the first communication phase (451) in order to determine which of the subscriber stations (10, 20, 30) of the bus system (1) receives at least temporarily exclusive, collision-free access to the bus (40) in the subsequent, second communication phase (452).

13. Bus system (1) having
a bus (40), and
at least two subscriber stations (10; 20; 30) which are connected to one another via the bus (40) in such a way that they can communicate serially with one another and at least one subscriber station (10; 30) of which is a subscriber station (10; 30) according to one of the preceding claims.

14. Method for communication in a serial bus system (1), the method being carried out using a subscriber station (10; 30) of the bus system (1), which subscriber station has a communication control device (11; 31) and a transmitting/receiving device (12; 22; 32), wherein the method comprises the steps of
using the communication control device (11; 31) to control a communication of the subscriber station (10; 30) with at least one other subscriber station (10; 20; 30) of the bus system (1) such that, for a message (45) exchanged between subscriber stations (10, 20, 30) of the bus system (1), the bit time (t_bt1) of a signal transmitted to the bus (40) in a first communication phase (451) may differ from a bit time (t_bt2) of a signal transmitted in the second communication phase (452), and
using the transmitting/receiving device (12; 32) to transmit the transmission signal (TxD) to a bus (40) of the bus system (1),
wherein the communication control device (11; 31) generates the transmission signal (TxD) for a transmitting/receiving device (12; 32) of the subscriber station (10; 30) according to a frame (450) and inserts a field (ADS) having a rising edge and a subsequent falling edge into the frame (450) to transition from the first communication phase (451) to the second communication phase (452),
wherein the communication control device (11; 31) performs a pulse width modulation of the transmission signal (TxD) in the field (ADS) and the second communication phase (452) in order to use the pulse width modulation in the field (ADS) to signal to the transmitting/receiving device (12; 32) that the transmitting/receiving device (12; 32) is supposed to switch its operating mode from the operating mode (B_451) of the first communication phase (451) to a different operating mode (B_452_TX; 452_RX) of the second communication phase (452),
wherein the communication control device (11; 31) performs the pulse width modulation of the transmission signal (TxD) to signal operating mode switching in the first bit (AL1) at the beginning of the field (ADS) in such a way that at least the last part of the first bit (AL1) of the field (ADS) has the value logic 1, and
wherein the communication control device (11; 31) performs no pulse width modulation of the transmission signal (TxD) to signal operating mode switching if the transmitting/receiving device (12; 32) is not supposed to switch its operating mode from the operating mode (B_451) of the first communication phase (451) to an operating mode (B_452_TX; B_452_RX) of the second communication phase (452), and, directly after a second bit (DH1) of the field (ADS), which is the first bit (DH1) of the second communication phase (452), inserts at least one additional bit having the same value as the second bit (DH1) of the field (ADS),
so that the field (ADS) has a predetermined length between the rising edge and the subsequent falling edge, and so that a sampling time (t1) at which a communication control device (21; 31; 11) of the at least one other subscriber station (10; 20; 30) of the bus system (1) will sample the first bit (DH1) of the second communication phase (452) is arranged between the rising edge and the subsequent falling edge.

## Revendications

1. Station d'abonné (10 ; 30) pour un système de bus série (1), comprenant
un dispositif (11 ; 31) de commande de communication destiné à commander une communication de la station d'abonné (10 ; 20 ; 30) avec au moins une autre station d'abonné (10 ; 20 ; 30) du système de bus (1) et pour générer un signal d'émission (TxD) pour un dispositif d'émission/réception (12 ; 32) de la station d'abonné (10 ; 30), de telle sorte que, pour un message (45) échangé entre des stations d'abonnés (10, 20, 30) du système de bus (1), le temps de bit (t_bt1) d'un signal envoyé sur le bus (40) dans une première phase de communication (451) pouvant différer d'un temps de bit (t_bt2) d'un signal envoyé dans la deuxième phase de communication (452),
le dispositif (11 ; 31) de commande de communication étant conçu pour générer le signal d'émission (TxD) selon une trame (450) et pour insérer dans la trame (450), pour le passage de la première phase de communication (451) à la deuxième phase de communication (452), un champ (ADS) avec un front montant suivi d'un front descendant,
le dispositif (11 ; 31) de commande de communication étant conçu pour effectuer, dans le champ (ADS) et la deuxième phase de communication (452), une modulation de largeur d'impulsion du signal d'émission (TxD) afin de signaler au dispositif d'émission/réception (12 ; 32) avec la modulation de largeur d'impulsion dans le champ (ADS) que le dispositif d'émission/réception (12 ; 32) doit commuter son mode de fonctionnement du mode (B_451) de la première phase de communication (451) à un mode de fonctionnement différent (B_452_TX ; 452_RX) de la deuxième phase de communication (452),
le dispositif (11 ; 31) de commande de communication étant conçu pour effectuer la modulation de largeur d'impulsion du signal d'émission (TxD) pour la signalisation du changement de mode de fonctionnement dans le premier bit (AL1) au début du champ (ADS) de telle sorte qu'au moins la dernière partie du premier bit (AL1) du champ (ADS) ait la valeur logique 1, et
le dispositif (11 ; 31) de commande de communication étant conçu pour ne pas effectuer de modulation de largeur d'impulsion du signal d'émission (TxD) pour signaler le changement de mode de fonctionnement lorsque le dispositif d'émission/réception (12 ; 32) ne doit pas commuter son mode de fonctionnement du mode (B_451) de la première phase de communication (451) vers un mode de fonctionnement (B_452_TX ; B_452_RX) de la deuxième phase de communication (452), et pour insérer, directement après un deuxième bit (DH1) du champ (ADS), qui est le premier bit (DH1) de la deuxième phase de communication (452), au moins un bit supplémentaire qui a la même valeur que le deuxième bit (DH1) du champ (ADS),
de telle sorte que le champ (ADS), entre le front montant et le front descendant suivant, ait une longueur prédéterminée, et de telle sorte qu'un instant d'échantillonnage (t1), auquel un dispositif de commande de communication (21 ; 31 ; 11) de ladite au moins une autre station d'abonné (10 ; 20 ; 30) du système de bus (1) va échantillonner le premier bit (DH1) de la deuxième phase de communication (452), soit situé entre le front montant et le front descendant suivant.

2. Station d'abonné (10 ; 30) selon la revendication 1, dans laquelle la longueur prédéterminée du champ (ADS) comporte au moins trois bits avec le temps de bit (t_bt2) de la deuxième phase de communication (452).

3. Station d'abonné (10 ; 30) selon la revendication 1 ou la revendication 2, dans laquelle le front descendant définit le début d'un bit prédéterminé (DL1) de la deuxième phase de communication (452).

4. Station d'abonné (10 ; 30) selon l'une des revendications précédentes, dans laquelle le dispositif (11) de commande de communication est conçu pour insérer le champ (ADS) sous la forme d'une séquence de bits ayant la valeur logique 1110.

5. Station d'abonné (10 ; 30) selon l'une des revendications précédentes, dans laquelle le dispositif (11) de commande de communication est conçu pour insérer dans le champ (ADS) avant le front descendant un bit avec le temps de bit (t_bt1) de la première phase de communication (451) et, à la suite de celui-ci, un bit (DH1) avec le temps de bit (t_bt2) de la deuxième phase de communication (452),
le dispositif (11) de commande de communication étant conçu pour insérer, à la suite du bit (DH1) avec le temps de bit (t_bt2) de la deuxième phase de communication (452), un nombre supplémentaire de M bits avec le temps de bit (t_bt2) de la deuxième phase de communication (452), qui ont chacun la même valeur logique que le premier bit (DH1) de la deuxième phase de communication (452), et
M étant un nombre naturel supérieur ou égal à 1.

6. Station d'abonné (10 ; 30) selon l'une des revendications précédentes,
dans laquelle le dispositif (11) de commande de communication est conçu pour agir en tant que nœud de réception dans la deuxième phase de communication (452), de sorte que le dispositif (11) de commande de communication agit uniquement en tant que récepteur, mais pas en tant qu'émetteur, de la trame (450) sur le bus (40),
le dispositif (11) de commande de communication étant conçu pour, dans le champ (ADS), à partir de l'instant d'échantillonnage (t1) auquel le dispositif de commande de communication (21 ; 31 ; 11) échantillonne le premier bit (DH1) de la deuxième phase de communication (452), et y compris cet instant, et avant le front descendant du champ (ADS), tolérer un nombre de N bits avec le temps de bit (t_bt2) de la deuxième phase de communication (452), qui ont chacun la valeur logique 1,
N étant un nombre naturel supérieur ou égal à 1, et
le dispositif (11) de commande de communication étant conçu pour utiliser le front descendant du champ (ADS) afin de se synchroniser sur la communication sur le bus (40).

7. Station d'abonné (10 ; 30) selon l'une des revendications précédentes,
comprenant en outre le dispositif d'émission/réception (12 ; 32) pour émettre le signal d'émission (TxD) sur un bus (40) du système de bus (1).

8. Station d'abonné (10 ; 30) selon la revendication 7,
dans laquelle le dispositif (11) de commande de communication est conçu pour signaler au dispositif d'émission/réception (12 ; 32), directement après le front montant du champ (ADS), au moyen d'une modulation de largeur d'impulsion dans le signal d'émission (TxD), que le dispositif d'émission/réception (12 ; 32) doit commuter son mode de fonctionnement du mode de fonctionnement (B_451) de la première phase de communication (452) à l'un des deux modes de fonctionnement différents (B_452_TX ; 452_RX) de la deuxième phase de communication (452) et dans lequel des deux modes de fonctionnement (B_452_TX ; B_452_RX) de la deuxième phase de communication (452) il doit passer.

9. Station d'abonné (10 ; 30) selon la revendication 7 ou la revendication 8, dans laquelle le dispositif (11 ; 31) de commande de communication est conçu pour signaler au dispositif d'émission/réception (12 ; 32), au moyen de S symboles PWM (SB_D0 ; SB_1) se succédant directement dans le signal d'émission (TxD), dans quel mode de fonctionnement de la deuxième phase de communication (452) le dispositif d'émission/réception (12 ; 32) doit commuter son mode de fonctionnement, S étant un nombre naturel supérieur ou égal à 1.

10. Station d'abonné (10 ; 30) selon l'une des revendications 7 à 9, dans laquelle le dispositif (11 ; 31) de commande de communication est conçu pour émettre au moins la dernière partie (AL1_1) d'un bit (AL1) qui a le temps de bit (t_bt1) de la première phase de communication (451) avec la même valeur logique que le premier bit (DH1) dans le champ (ADS) qui a le temps de bit (t_bt2) de la deuxième phase de communication (452).

11. Station d'abonné (10 ; 30) selon l'une des revendications 1 à 6, comprenant en outre un dispositif d'émission/réception (22) pour émettre le signal d'émission (TxD) sur un bus (40) du système de bus (1),
le dispositif d'émission/réception (22) étant conçu pour envoyer l'ensemble de la trame (450) dans le mode de fonctionnement (B_451) pour l'émission et la réception de la trame (450) dans la première phase de communication (451) sur le bus (40).

12. Station d'abonné (10 ; 30) selon l'une des revendications précédentes,
dans laquelle la trame (450) formée pour le message (45) est structurée de manière compatible avec CAN FD, et
dans laquelle, dans la première phase de communication (451), il est convenu laquelle des stations d'abonnés (10, 20, 30) du système de bus (1) obtient, dans la deuxième phase de communication (452) suivante, un accès au moins temporairement exclusif et sans collision au bus (40).

13. Système de bus (1), comprenant
un bus (40), et
au moins deux stations d'abonnés (10 ; 20 ; 30) qui sont reliées entre elles par l'intermédiaire du bus (40) de telle sorte qu'elles soient aptes à communiquer entre elles en série et dont au moins une station d'abonné (10 ; 30) est une station d'abonné (10 ; 30) selon l'une des revendications précédentes.

14. Procédé de communication dans un système de bus série (1), le procédé étant mis en œuvre avec une station d'abonné (10 ; 30) du système de bus (1) qui comprend un dispositif (11 ; 31) de commande de communication et un dispositif d'émission/réception (12 ; 22 ; 32), le procédé comprenant les étapes suivantes :
commander, au moyen du dispositif (11 ; 31) de commande de communication, une communication de la station d'abonné (10 ; 30) avec au moins une autre station d'abonné (10 ; 20 ; 30) du système de bus (1), de telle sorte que, pour un message (45) échangé entre des stations d'abonné (10, 20, 30) du système de bus (1), le temps de bit (t_bt1) d'un signal envoyé sur le bus (40) dans une première phase de communication (451) est apte à être différencié d'un temps de bit (t_bt2) d'un signal envoyé dans la deuxième phase de communication (452), et
envoyer, au moyen du dispositif d'émission/réception (12 ; 32), le signal d'émission (TxD) sur un bus (40) du système de bus (1),
le dispositif (11 ; 31) de commande de communication générant le signal d'émission (TxD) pour un dispositif d'émission/réception (12 ; 32) de la station d'abonné (10 ; 30) conformément à une trame (450), et insérant dans la trame (450), pour le passage de la première phase de communication (451) à la deuxième phase de communication (452), un champ (ADS) avec un front montant et un front descendant suivant dans la trame (450),
le dispositif (11 ; 31) de commande de communication effectuant dans le champ (ADS) et dans la deuxième phase de communication (452) une modulation de largeur d'impulsion du signal d'émission (TxD) afin de signaler au dispositif d'émission/réception (12 ; 32) avec la modulation de largeur d'impulsion dans le champ (ADS) que le dispositif d'émission/réception (12 ; 32) doit commuter son mode de fonctionnement du mode (B_451) de la première phase de communication (451) à un mode différent (B_452_TX ; 452_RX) de la deuxième phase de communication (452),
le dispositif (11 ; 31) de commande de communication effectuant la modulation de largeur d'impulsion du signal d'émission (TxD) pour signaler le changement de mode de fonctionnement dans le premier bit (AL1) au début du champ (ADS) de telle sorte qu'au moins la dernière partie du premier bit (AL1) du champ (ADS) ait la valeur logique 1, et
le dispositif (11 ; 31) de commande de communication n'effectuant aucune modulation de largeur d'impulsion du signal d'émission (TxD) pour signaler le changement de mode de fonctionnement lorsque le dispositif d'émission/réception (12 ; 32) ne doit pas commuter son mode de fonctionnement du mode de fonctionnement (B_451) de la première phase de communication (451) vers un mode de fonctionnement (B_452_TX ; B_452_RX) de la deuxième phase de communication (452), et directement après un deuxième bit (DH1) du champ (ADS), qui est le premier bit (DH1) de la deuxième phase de communication (452), au moins un bit supplémentaire qui a la même valeur que le deuxième bit (DH1) du champ (ADS),
de telle sorte que le champ (ADS), entre le front montant et le front descendant suivant, ait une longueur prédéterminée, et de telle sorte qu'un instant d'échantillonnage (t1), auquel un dispositif de commande de communication (21 ; 31 ; 11) de ladite au moins une autre station d'abonné (10 ; 20 ; 30) du système de bus (1) va échantillonner le premier bit (DH1) de la deuxième phase de communication (452), soit situé entre le front montant et le front descendant suivant.
